# EUROPEAN PATENT APPLICATION

(11) **EP 4 826 662 A2**
(43) Date of publication of application: **21.10.2026**
(21) Application number: 26203689.0
(22) Date of filing: 19.06.2023
(51) Int. Cl.: G06T 12/20

(54) **METHODS AND SYSTEMS FOR IMAGE RECONSTRUCTION**

(30) Priority: 17.06.2022 CN 202210688095; 17.06.2022 CN 202210689642
(62) Document number(s) of the earlier application(s) in accordance with Art. 76 EPC: 23823288.8 / 4 526 846
(71) Applicant: Shanghai United Imaging Healthcare Co., Ltd., Shanghai 201807 (CN)
(72) Inventor: TANG, Songsong, Shanghai 201807 (CN); LI, Yue, Shanghai 201807 (CN); WU, Yifan, Shanghai 201807 (CN); DONG, Yun, Shanghai 201807 (CN)
(74) Representative: Wang, Bo

(57) **Abstract**

The present disclosure provides methods and systems for image reconstruction. The methods may include: obtaining background coincidence event data and target coincidence event data, the background coincidence event data being related to a first plurality of background coincidence events, the target coincidence event data being related to a target object; obtaining a target normalization correction factor; correcting the target coincidence event data based on the target normalization correction factor; and generating a target image by performing image reconstruction based on the background coincidence event data and the corrected target coincidence event data.

## Description

### CROSS-REFERENCE TO RELATED APPLICATIONS

This application claims priority of Chinese Patent Application No. 202210688095.5, filed on June 17, 2022, and Chinese Patent Application No. 202210689642.1, filed on June 17, 2022, the contents of each of which are hereby incorporated by reference to its entirety.

### TECHNICAL FIELD

The present disclosure relates to the field of medical technology, and in particular, to methods and systems for image reconstruction.

### BACKGROUND

In the field of nuclear medicine, Positron Emission Tomography (PET) is a rapidly developing imaging technique that is widely used in clinical testing. A PET-CT system combining PET and X-ray computed tomography (CT) is often used, and a PET-CT system with a long axial field of view has gained rapid attention and development because of its extremely high sensitivity. In the PET-CT system, radiation(s) generated by CT scanning is the main radiation source. In order to reduce a radiation dose of the whole system, it is necessary to design a PET-CT system without CT.

In the PET-CT system, it is necessary to perform attenuation correction and scatter correction on PET data and to perform normalization correction on at least a portion of the PET data, and CT scan data is generally required in the correction(s). A CT image can be converted to obtain an attenuation image of a scanned object corresponding to gamma photons with an energy of 511 keV, and the attenuation image can be used for the attenuation correction and scatter correction performed on the PET data after registration, thereby reconstructing a PET image. At the same time, in the normalization correction, it is necessary to use a uniform phantom to perform scanning (including CT scanning), perform attenuation, scatter, and/or other physical correction on the scan data to obtain true coincidence event data, and then obtain a target normalization correction factor. Issue(s) of attenuation correction, scatter correction, and normalization correction for PET data correction without CT scanning need to be addressed.

Therefore, it is desirable to provide methods and systems for image reconstruction to realize the correction of PET data without CT scanning.

### SUMMARY

One aspect of the present disclosure may provide a method implemented on at least one machine each of which has at least one processor and at least one storage device for image reconstruction. The method may include: obtaining background coincidence event data and target coincidence event data, the background coincidence event data being related to a first plurality of background coincidence events, the target coincidence event data being related to a target object; obtaining a target normalization correction factor; correcting the target coincidence event data based on the target normalization correction factor; and generating a target image by performing image reconstruction based on the background coincidence event data and the corrected target coincidence event data.

One aspect of the present disclosure may provide a system for image reconstruction. The system may include: a first data obtaining module, a normalization correction factor obtaining module, a data correction module, and an image generation module, wherein the first data obtaining module is configured to obtain background coincidence event data and target coincidence event data, the target coincidence event data being associated with a target object; the normalization correction factor obtaining module is configured to obtain a target normalization correction factor; the data correction module is configured to correct the target coincidence event data based on the target normalization correction factor; and the image generation module is configured to generate a target image by performing image reconstruction based on the background coincidence event data and the corrected target coincidence event data.

One aspect of the present disclosure may provide a non-transitory computer readable medium storing instructions. The instructions, when executed by at least one processor, cause the at least one processor to implement a method including: obtaining background coincidence event data and target coincidence event data, the background coincidence event data being related to a first plurality of background coincidence events, the target coincidence event data being related to a target object; obtaining a target normalization correction factor; correcting the target coincidence event data based on the target normalization correction factor; and generating a target image by performing image reconstruction based on the background coincidence event data and the corrected target coincidence event data.

One aspect of the present disclosure may provide a method implemented on at least one machine each of which has at least one processor and at least one storage device for correcting an imaging device. The method may include: obtaining first reference background coincidence event data related to a first plurality of background coincidence events; determining a reference normalization correction factor corresponding to the first plurality of background coincidence events based on the first reference background coincidence event data; and determining a target normalization correction factor of the imaging device based on the reference normalization correction factor and a mapping relationship between the target normalization correction factor and the reference normalization correction factor.

One aspect of the present disclosure may provide a system for correcting an imaging device. The system may include: a second data obtaining module, an event correction factor obtaining module, and a device correction factor determination module, wherein the second data obtaining module is configured to obtain first reference background coincidence event data related to a first plurality of background coincidence events; the event correction factor obtaining module is configured to determine a reference normalization correction factor corresponding to the first plurality of background coincidence events based on the first reference background coincidence event data; and the device correction factor determination module is configured to determine a target normalization correction factor of the imaging device based on the reference normalization correction factor and a mapping relationship between the target normalization correction factor and the reference normalization correction factor.

One aspect of the present disclosure may provide a non-transitory computer readable medium storing instructions. The instructions, when executed by at least one processor, cause the at least one processor to implement a method including: obtaining first reference background coincidence event data related to a first plurality of background coincidence events; determining a reference normalization correction factor corresponding to the first plurality of background coincidence events based on the first reference background coincidence event data; and determining a target normalization correction factor of the imaging device based on the reference normalization correction factor and a mapping relationship between the target normalization correction factor and the reference normalization correction factor.

One aspect of the present disclosure may provide a method implemented on at least one machine each of which has at least one processor and at least one storage device for image reconstruction. The method may include: obtaining background coincidence event data and target coincidence event data, the background coincidence event data being related to a first plurality of background coincidence events, the target coincidence event data being related to a target object; estimating an initial attenuation sinogram based on the background coincidence event data; and generating a target image by performing image reconstruction based on the initial attenuation sinogram and the target coincidence event data.

One aspect of the present disclosure may provide a method implemented on at least one machine each of which has at least one processor and at least one storage device for image reconstruction. The method may include: obtaining background coincidence event data and target coincidence event data, the background coincidence event data being related to a first plurality of background coincidence events, the target coincidence event data being related to a target object; performing a time-of-flight correction on the target coincidence event data based on the background coincidence event data; and/or generating a target image by performing image reconstruction at least based on the time-of-flight-corrected target coincidence event data. In some embodiments, the method may include: obtaining target coincidence event data related to a target object; obtaining one or more time-of-flight correction factors; performing a time-of-flight correction on the target coincidence event data based on the one or more time-of-flight correction factors. In some embodiments, the time-of-flight correction factors may be determined based on background coincidence event data. In some embodiments, the background coincidence event data may be related to a first plurality of background coincidence events.

One aspect of the present disclosure may provide a system for image reconstruction. The system may include: a third data obtaining module, a sinogram generation module, and an image reconstruction module, wherein the third data obtaining module is configured to obtain background coincidence event data and target coincidence event data, the background coincidence event data being related to a first plurality of background coincidence events, the target coincidence event data being related to a target object; the sinogram generation module is configured to estimate an initial attenuation sinogram based on the background coincidence event data; and the image reconstruction module is configured to generate a target image by performing image reconstruction based on the initial attenuation sinogram and the target coincidence event data.

One aspect of the present disclosure may provide a non-transitory computer readable medium storing instructions. The instructions, when executed by at least one processor, cause the at least one processor to implement a method including: obtaining background coincidence event data and target coincidence event data, the background coincidence event data being related to a first plurality of background coincidence events, the target coincidence event data being related to a target object; estimating an initial attenuation sinogram based on the background coincidence event data; and generating a target image by performing image reconstruction based on the initial attenuation sinogram and the target coincidence event data.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a schematic diagram illustrating an application scenario of a system for image reconstruction according to some embodiments of the present disclosure;
FIG. 2 is a schematic diagram illustrating an exemplary system for image reconstruction according to some embodiments of the present disclosure;
FIG. 3 is a schematic diagram illustrating another exemplary system for image reconstruction according to some embodiments of the present disclosure;
FIG. 4 is a schematic diagram illustrating an exemplary system for correcting an imaging device according to some embodiments of the present disclosure;
FIG. 5 is a flowchart illustrating an exemplary process for image reconstruction according to some embodiments of the present disclosure;
FIG. 6 is a flowchart illustrating another exemplary process for image reconstruction according to some embodiments of the present disclosure;
FIG. 7 is a flowchart illustrating an exemplary process for correcting an imaging device according to some embodiments of the present disclosure;
FIG. 8 is a schematic diagram illustrating a decay energy level of Lu-176 according to some embodiments of the present disclosure;
FIG. 9 is a schematic diagram illustrating an exemplary screening process of background coincidence event(s) according to some embodiments of the present disclosure;
FIG. 10 is a schematic diagram illustrating an exemplary screening process of target coincidence event(s) according to some embodiments of the present disclosure;
FIG. 11 is a schematic diagram illustrating an exemplary calibration process of target normalization correction factor(s) corresponding to a gamma photon with 511 keV according to some embodiments of the present disclosure;
FIG. 12 is a schematic diagram illustrating an exemplary obtaining process of the target normalization correction factor(s) corresponding to the gamma photon with 511 keV according to some embodiments of the present disclosure;
FIG. 13 is a schematic diagram illustrating an exemplary process for obtaining target normalization correction factor(s) using phantom coincidence event data according to some embodiments of the present disclosure;
FIG. 14 is a schematic diagram illustrating an exemplary process for obtaining the target normalization correction factor(s) using background coincidence event data according to some embodiments of the present disclosure;
FIG. 15 is a schematic diagram illustrating an exemplary process for image reconstruction according to some embodiments of the present disclosure;
FIG. 16 is a schematic diagram illustrating an exemplary process for image reconstruction according to some embodiments of the present disclosure; and
FIG. 17 is a schematic diagram illustrating an exemplary process for image reconstruction according to some embodiments of the present disclosure.

### DETAILED DESCRIPTION

The technical solutions of the present disclosure embodiments will be more clearly described below, and the accompanying drawings need to be configured in the description of the embodiments will be briefly described below. Obviously, drawings described below are only some examples or embodiments of the present disclosure. Those skilled in the art, without further creative efforts, may apply the present disclosure to other similar scenarios according to these drawings. Unless obviously obtained from the context or the context illustrates otherwise, the same numeral in the drawings refers to the same structure or operation.

It should be understood that the "system", "device", "unit", and/or "module" used herein are one method to distinguish different components, elements, parts, sections, or assemblies of different levels in ascending order. However, the terms may be displaced by other expressions if they may achieve the same purpose.

As shown in the present disclosure and claims, unless the context clearly prompts the exception, "a", "one", and/or "the" is not specifically singular, and the plural may be included. It will be further understood that the terms "comprise," "comprises," and/or "comprising," "include," "includes," and/or "including," when used in the present disclosure, specify the presence of stated steps and elements, but do not preclude the presence or addition of one or more other steps and elements thereof.

The flowcharts are used in present disclosure to illustrate the operations performed by the system according to the embodiment of the present disclosure. It should be understood that the front or rear operation is not necessarily performed in order to accurately. Instead, the operations may be processed in reverse order or simultaneously. Moreover, one or more other operations may be added to the flowcharts. One or more operations may be removed from the flowcharts.

In some application scenarios, a system for image reconstruction may include a processing device and/or a medical imaging device. The system for image reconstruction may obtain background radiation signal(s) through the medical imaging device, and use the background radiation signal(s) to implement the method(s) and/or process(es) disclosed in the present disclosure through the processing device to determine target normalization correction factor(s) of the medical imaging device (for example, a PET device) and attenuation correction factor(s) of a scanned object, thereby performing normalization correction on the medical imaging device, and performing attenuation correction and/or scatter correction on PET scan data of the scanned object, so as to realize the problem of attenuation, scatter, and normalization correction of scan data without CT, avoid radiation damage caused by CT scanning, which is no need to register CT and PET images, thereby simplifying an operation process, reducing a scanning time, and reducing the radiation damage to the scanned object and an operator.

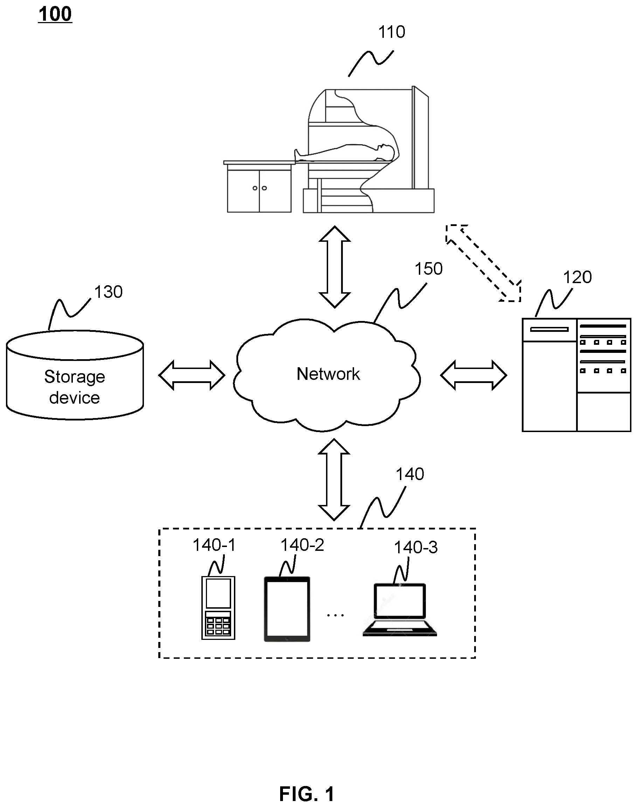

FIG. 1 is a schematic diagram illustrating an application scenario of a system for image reconstruction according to some embodiments of the present disclosure.

As shown in FIG. 1, in some embodiments, a system 100 may include an imaging device 110, a processing device 120, a storage device 130, a terminal 140, and a network 150.

The imaging device 110 may refer to a medical device that generates an image showing an internal structure of a human body. In some embodiments, the imaging device 110 may be any medical device that images or treats a designated body part of a patient using radionuclides. For example, the imaging device 110 may be a PET-CT device, a PET device, a Single-Photon Emission Computed Tomography (SPECT) device, a SPECT-CT device, a PET-Magnetic Resonance (MR) device, etc. The imaging device 110 provided above is for illustrative purposes only, and not intended to limit a scope thereof. A detector in the imaging device 110 may receive radiation(s) from a radiation source and measure the received radiation(s). In some embodiments, the imaging device 110 may send data and/or information related to the detector to the processing device 120. For example, the data and/or information may include an energy value of a radiation photon received by the detector, an output value of the detector, etc. In some embodiments, the imaging device 110 may collect background coincidence event data (i.e., background radiation signal(s)) of the device, target coincidence event data of a scanned target object (e.g., a human body, a phantom), etc., and send them to the processing device 120. In some embodiments, the imaging device 110 may perform normalization correction on the device according to the target normalization correction factor determined by the processing device 120. The imaging device 110 may receive instructions sent by a doctor through the terminal 140, and perform related operations according to the instructions, such as irradiation imaging. In some embodiments, the imaging device 110 may exchange data and/or information with other components (e.g., the processing device 120, the storage device 130, the terminal 140) in the system 100 through the network 150. In some embodiments, the imaging device 110 may interface directly with the other components in the system 100. In some embodiments, one or more components (e.g., the processing device 120, the storage device 130) in the system 100 may be included within the imaging device 110.

The processing device 120 may process data and/or information obtained from other devices or system components, and execute the method for image reconstruction shown in some embodiments of the present disclosure based on the data, information, and/or processing results, so as to complete one or more functions described in some embodiments of the present disclosure. For example, the processing device 120 may obtain target normalization correction factor(s) of the device based on background coincidence event data of the imaging device 110 and target coincidence event data of the scanned target object, so as to perform the normalization correction on the imaging device 110. As another example, the processing device 120 may obtain an attenuation sinogram based on the background coincidence event data of the imaging device 110, and perform at least one of attenuation correction, scatter correction, image reconstruction, etc., based on the attenuation sinogram and the target coincidence event data. In some embodiments, the processing device 120 may send processed data (e.g., the target normalization correction factor and attenuation sonogram) to the storage device 130 for storage. In some embodiments, the processing device 120 may obtain pre-stored data and/or information (e.g., the background coincidence event data, the target coincidence event data, and various calculation formulas) from the storage device 130 to be used to execute the method for image reconstruction and/or a method for correcting an imaging device shown in some embodiments of the present disclosure. For example, the method may include obtaining the target normalization correction factor of the device or the like.

In some embodiments, the processing device 120 may include one or more sub-processing devices (e.g., a single-core processing device or a multi-core processing device). Merely by way of example, the processing device 120 may include a central processing unit (CPU), an application-specific integrated circuit (ASIC), an application-specific instruction processor (ASIP), a graphics processing unit (GPU), a physical processing unit (PPU), a digital signal processor ( DSP), a field programmable gate array (FPGA), a programmable logic circuit (PLD), a controller, a microcontroller unit, a reduced instruction set computer (RISC), a microprocessor, or the like, or any combination thereof.

The storage device 130 may store data or information generated by other devices. In some embodiments, the storage device 130 may store data and/or information (e.g., the background coincidence event data and the target coincidence event data) collected by the imaging device 110. In some embodiments, the storage device 130 may store data and/or information (e.g., the target normalization correction factor of the device) processed by the processing device 120. The storage device 130 may include one or more storage components, and each storage component may be an independent device or a portion of other devices. The storage device 130 may be local or implemented through a cloud.

The terminal 140 may control operation(s) of the imaging device 110. The doctor may issue an operation instruction to the imaging device 110 through the terminal 140, so that the imaging device 110 may complete a specified operation (e.g., irradiating and imaging a specified body part of the patient). In some embodiments, the terminal 140 may cause the processing device 120 to execute the method for image reconstruction and/or the method for correcting the imaging device as shown in some embodiments of the present disclosure based on the operation instruction. In some embodiments, the terminal 140 may receive a reconstructed image from the processing device 120, so that the doctor may accurately judge a condition of the patient, so as to perform an effective and targeted examination and/or treatment on the patient. In some embodiments, the terminal 140 may be one or any combination of a mobile device 140-1, a tablet computer 140-2, a laptop computer 140-3, a desktop computer, and other devices with input and/or output functions.

The network 150 may connect various components of the system and/or connect the system with portions of external resources. The network 150 may enable communication between the various components and with other components outside the system, facilitating an exchange of the data and/or information. In some embodiments, the one or more components (e.g., the imaging device 110, the processing device 120, the storage device 130, and the terminal 140) in the system 100 may send the data and/or information to other components through the network 150. In some embodiments, the network 150 may be at least one of a wired network or a wireless network.

It should be noted that the above description is provided for illustrative purposes only and is not intended to limit a scope of the present disclosure. Those skilled in the art may make various changes and modifications under a guidance of contents of the present disclosure. Features, structures, methods, and other features of the exemplary embodiments described in the present disclosure may be combined in various ways to obtain additional and/or alternative exemplary embodiments. For example, the processing device 120 may be implemented based on a cloud computing platform, such as a public cloud, a private cloud, a community and hybrid cloud, or the like. However, these changes and modifications do not depart from the scope of the present disclosure.

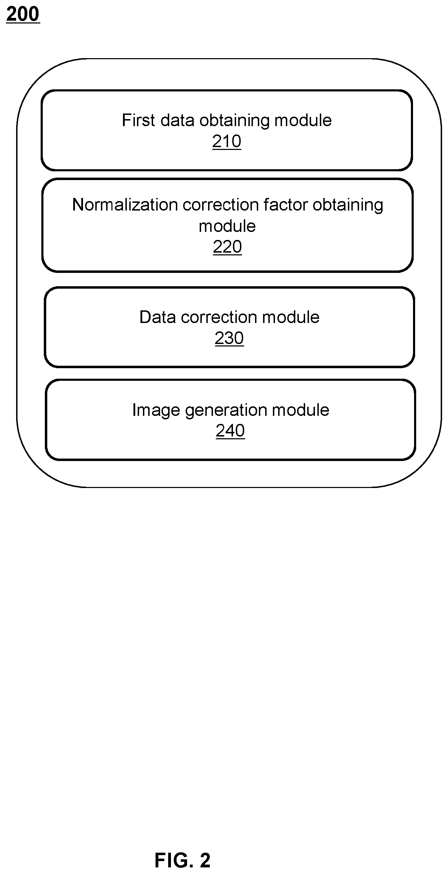

FIG. 2 is a schematic diagram illustrating an exemplary system for image reconstruction according to some embodiments of the present disclosure.

As shown in FIG. 2, in some embodiments, a system 200 for image reconstruction may include a first data obtaining module 210, a normalization correction factor obtaining module 220, a data correction module 230 and an image generation module 240.

In some embodiments, the first data obtaining module 210 may be configured to obtain background coincidence event data and/or target coincidence event data. The background coincidence event data may be related to a first plurality of background coincidence events, and the target coincidence event data may be related to a target object (e.g., a human body, a phantom, etc.).

In some embodiments, the first data obtaining module 210 may be configured to collect the background coincidence event data simultaneously with the target coincidence event data.

In some embodiments, the first data obtaining module 210 may be configured to obtain the background coincidence event data by identifying, from single event data of a plurality of single events generated during imaging the target object, the background coincidence event data using a first rule; and obtain the target coincidence event data by identifying, from the single event data, the target coincidence event data using a second rule.

In some embodiments, the normalization correction factor obtaining module 220 may be configured to obtain one or more target normalization correction factors.

In some embodiments, the normalization correction factor obtaining module 220 may be configured to obtain first reference background coincidence event data related to a second plurality of background coincidence events; determine one or more reference normalization correction factors corresponding to the second plurality of background coincidence events based on the first reference background coincidence event data; and determine the target normalization correction factor(s) based on the reference normalization correction factor(s) and a mapping relationship between the target normalization correction factor and the reference normalization correction factor.

In some embodiments, the data correction module 230 may be configured to correct the target coincidence event data based on the target normalization correction factor(s).

In some embodiments, the image generation module 240 may be configured to generate a target image by performing image reconstruction based on the background coincidence event data and the corrected target coincidence event data.

In some embodiments, the target image may include an attenuation-corrected image or a scatter-corrected image.

In some embodiments, the image generation module 240 may be configured to estimate an initial attenuation sinogram based on the background coincidence event data; and generate the target image by performing image reconstruction based on the initial attenuation sinogram and the corrected target coincidence event data.

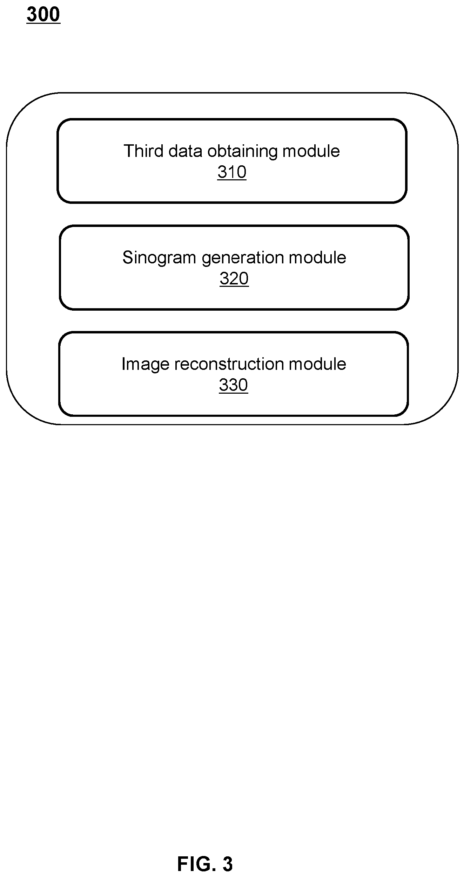

FIG. 3 is a schematic diagram illustrating another exemplary system for image reconstruction according to some embodiments of the present disclosure.

As shown in FIG. 3, in some embodiments, a system 300 for image reconstruction may include a third data obtaining module 310, a sinogram generation module 320, and an image reconstruction module 330.

In some embodiments, the third data obtaining module 310 may be configured to obtain background coincidence event data and/or target coincidence event data. The background coincidence event data may be related to a first plurality of background coincidence events, and the target coincidence event data may be related to a target object.

In some embodiments, the third data obtaining module 310 may be configured to collect the background coincidence event data before, after, or simultaneously with the target coincidence event data.

In some embodiments, the background coincidence event data may include data received by at least one combined response line, and each of the at least one combined response line may be obtained by combining two or more original response lines.

In some embodiments, the target coincidence event data and/or the background coincidence event data may include data obtained by normalization correction, e.g., target normalization correction factor(s) obtained using operation(s) shown in processes 500 and/or 700, the target coincidence event data and/or the background coincidence event data of the target object obtained after normalization correction.

In some embodiments, the sinogram generation module 320 may be configured to estimate an initial attenuation sinogram based on the background coincidence event data.

In some embodiments, the sinogram generation module 320 may be configured to determine the initial attenuation sinogram using a maximum likelihood estimation algorithm based on the background coincidence event data.

In some embodiments, the image reconstruction module 330 may be configured to generate the target image (i.e., a reconstructed image that meets a preset condition) by performing image reconstruction based on the initial attenuation sinogram and the target coincidence event data.

In some embodiments, the image reconstruction module 330 may be configured to obtain a corrected initial image by performing the image reconstruction based on the initial attenuation sinogram and the target coincidence event data. The corrected initial image may be a scatter-corrected image.

In some embodiments, the image reconstruction module 330 may be configured to reconstruct an attenuation map based on the initial attenuation sinogram; determine a scatter estimation image based on the attenuation map and the target coincidence event data; and obtain the corrected initial image by performing the image reconstruction based on the target coincidence event data, the initial attenuation sinogram, and/or the scatter estimation image.

In some embodiments, the image reconstruction module 330 may be configured to iteratively update, based on the target coincidence event data and the initial attenuation sinogram, the corrected initial image until a first preset condition is met, and designate an updated corrected initial image meeting the first preset condition as the target image.

In some embodiments, the image reconstruction module 330 may be configured to iteratively update, based on the target coincidence event data and the initial attenuation sinogram, the corrected initial image and the initial attenuation sinogram until a second preset condition is met, and designate an updated corrected initial image meeting the second preset condition as the target image.

In some embodiments, the image reconstruction module 330 may be configured to obtain a reconstructed initial image based on the initial attenuation sinogram and the target coincidence event data; and iteratively update the reconstructed initial image, the initial attenuation sinogram, an attenuation map, and a scatter estimation image until a third preset condition is met, and designate an updated reconstructed initial image meeting the third preset condition as the target image.

In some embodiments, the image reconstruction module 330 may be configured to obtain an updated image of a current iteration based on an updated image generated by a previous iteration, an attenuation sinogram generated by the previous iteration, and a scatter estimation image generated by the previous iteration, wherein an updated image generated by a first iteration may be the reconstructed initial image; determine an attenuation sinogram of the current iteration based on the updated image of the current iteration; determine an attenuation map of the current iteration based on the attenuation sinogram of the current iteration; and determine a scatter estimation image of the current iteration based on the attenuation map of the current iteration.

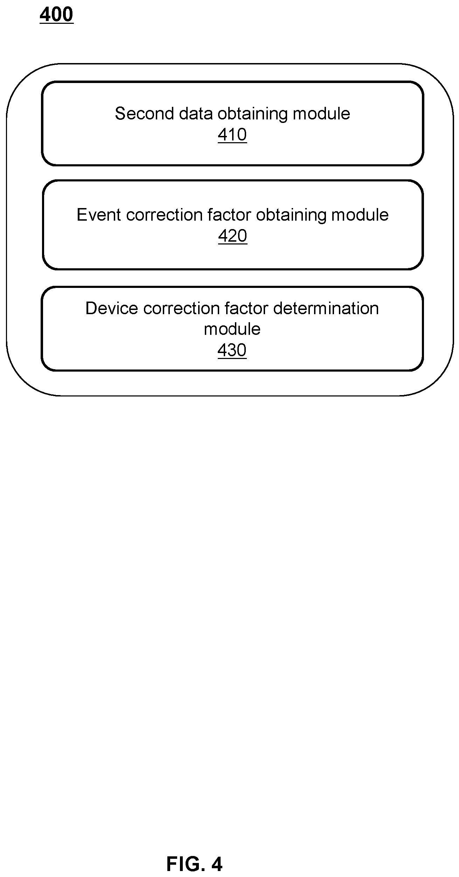

FIG. 4 is a schematic diagram illustrating an exemplary system for correcting an imaging device according to some embodiments of the present disclosure.

As shown in FIG. 4, in some embodiments, a system 400 for correcting an imaging device may include a second data obtaining module 410, an event correction factor obtaining module 420, and a device correction factor determination module 430.

In some embodiments, the second data obtaining module 410 may be configured to obtain background coincidence event data (for example, first reference background coincidence event data and/or second reference background coincidence event data) and/or phantom coincidence event data.

In some embodiments, the second data obtaining module 410 may be configured to obtain the first reference background coincidence event data by scanning without an object.

In some embodiments, the second data obtaining module 410 may be configured to collect the background coincidence event data before, after, or simultaneously with the phantom coincidence event data.

In some embodiments, the event correction factor obtaining module 420 may be configured to determine one or more target normalization correction factors corresponding to the background coincidence event(s) based on the background coincidence event data. In some embodiments, a target normalization correction factor determined based on the first reference background coincidence event data may be referred to as a reference normalization correction factor, and a target normalization correction factor determined based on the second reference background coincidence event data may be referred to as a first normalization correction factor. The reference normalization correction factor(s) and the first normalization correction factor(s) are similar except that they are based on different background coincidence data. In some embodiments, a same algorithm may be used to determine the reference normalization correction factor(s) and the first normalization correction factor(s). In some embodiments, at least one first normalization correction factor may include at least one of a first geometry correction factor, a first crystal interference correction factor, a first axial profile correction factor, a first detector ring correction factor for detection efficiency, a first circumferential profile correction factor, and a first crystal detection efficiency correction factor.

In some embodiments, the event correction factor obtaining module 420 may perform a plurality of iterative operations until the at least one first normalization correction factor is determined. Each of the plurality of iterative operations may be performed to determine a current first correction factor of the at least one first normalization correction factor among the first geometry correction factor, the first crystal interference correction factor, the first axial profile correction factor, the first detector ring correction factor for detection efficiency, the first circumferential profile correction factor, and the first crystal detection efficiency correction factor. In some embodiments, each of the plurality of iterative operations may include: obtaining an actual count of at least one portion of the second plurality of background coincidence events corresponding to the current first correction factor based on the second reference background coincidence event data; determining a theoretical count of the at least one portion of the second plurality of background coincidence events corresponding to the current first correction factor; determining the current first correction factor based on the actual count and the theoretical count to obtain a determined current first correction factor; and/or in response to a determination that at least one of the at least one first normalization correction factor is undetermined, correcting the actual count corresponding to the second reference background coincidence event data based on the determined current first correction factor.

In some embodiments, the event correction factor obtaining module 420 may also determine at least one second normalization correction factor corresponding to the plurality of phantom coincidence events based on the phantom coincidence event data. In some embodiments, the at least one second normalization correction factor may include at least one of a second geometry correction factor, a second crystal interference correction factor, a second axial profile correction factor, a second detector ring correction factor for detection efficiency, a second circumferential profile correction factor, and a second crystal detection efficiency correction factor.

In some embodiments, the event correction factor obtaining module 420 may perform a plurality of iterative operations until the at least one second normalization correction factor is determined. Each of the plurality of iterative operations may be performed to determine a current second correction factor of the at least one second normalization correction factor among the second geometry correction factor, the second crystal interference correction factor, the second axial profile correction factor, the second detector ring correction factor for detection efficiency, the second circumferential profile correction factor, and the second crystal detection efficiency correction factor. In some embodiments, each of the plurality of iterative operations may include: obtaining an actual count of at least one portion of the plurality of phantom coincidence events corresponding to the current second correction factor by performing physical correction on the phantom coincidence event data; determining a theoretical count of the at least one portion of the plurality of phantom coincidence events corresponding to the current second correction factor; and determining the current second correction factor based on the actual count and the theoretical count to obtain a determined current second correction factor, wherein in response to a determination that at least one of the at least one second normalization correction factor is undetermined, correcting the actual count corresponding to the phantom coincidence event data based on the determined current second correction factor.

In some embodiments, the event correction factor obtaining module 420 may determine a mapping relationship based on the at least one first normalization correction factor and the at least one second normalization correction factor. In some embodiments, the mapping relationship may include at least one of a first mapping relationship, a second mapping relationship, a third mapping relationship, a fourth mapping relationship, a fifth mapping relationship, and a sixth mapping relationship. The first mapping relationship may include a relationship between the first geometry correction factor and the second geometry correction factor. The second mapping relationship may include a relationship between the first crystal interference correction factor and the second crystal interference correction factor. The third mapping relationship may include a relationship between the first axial profile correction factor and the second axial profile correction factor. The fourth mapping relationship may include a relationship between the first detector ring correction factor for detection efficiency and the second detector ring correction factor for detection efficiency. The fifth mapping relationship may include a relationship between the first circumferential profile correction factor and the second circumferential profile correction factor. The sixth mapping relationship may include a relationship between the first crystal detection efficiency correction factor and the second crystal detection efficiency correction factor.

In some embodiments, the device correction factor determination module 430 may be configured to determine a target normalization correction factor of the imaging device based on the reference normalization correction factor and a mapping relationship between the target normalization correction factor and the reference normalization correction factor.

In some embodiments, the system 400 may further include a data correction module (not shown in FIG. 4). The data correction module may be configured to correct the target coincidence event data of the target object (e.g., a human body, a phantom, etc.) based on the target normalization correction factor of the imaging device; correct the background coincidence event data based on the first normalization correction factor; and perform the image reconstruction based on corrected target coincidence event data and/or corrected background coincidence event data to generate a target image.

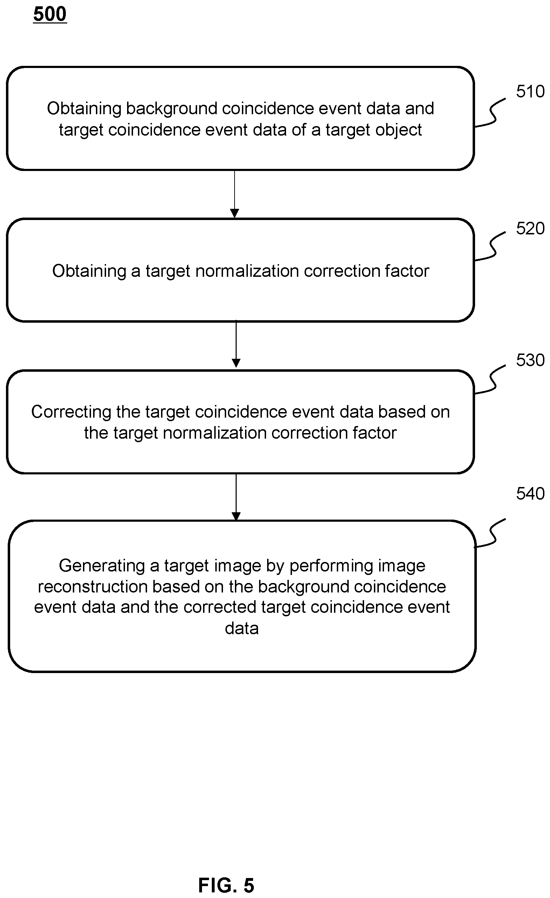

FIG. 5 is a flowchart illustrating an exemplary process for image reconstruction according to some embodiments of the present disclosure.

As shown in FIG. 5, a process 500 may include one or more of the following operations. In some embodiments, the process 500 may be performed by the processing device 120.

In 510, background coincidence event data and target coincidence event data may be obtained. The background coincidence event data may be related to a first plurality of background coincidence events, and the target coincidence event data may be related to a target object. In some embodiments, the operation 510 may be performed by the first data obtaining module 210.

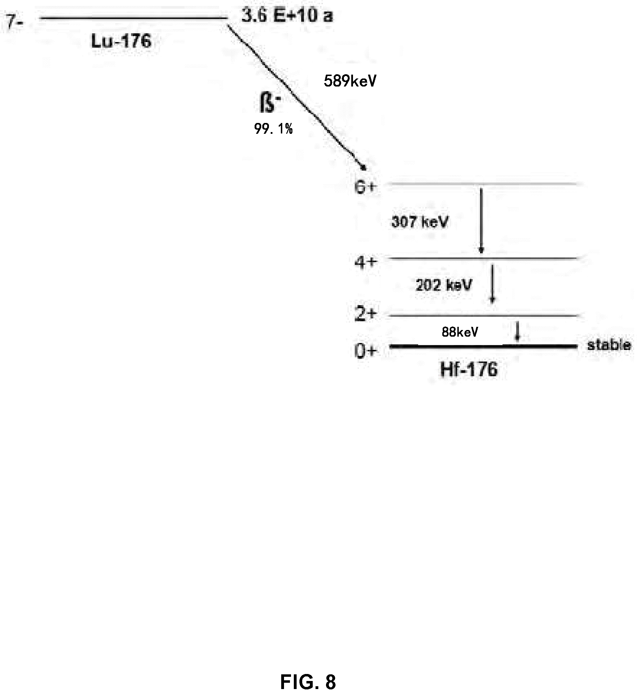

A background coincidence event is a coincidence event generated by a spontaneous background radiation of a crystal in an imaging device, that is, a radiation signal received by the coincidence event is generated by the background radiation. Common PET systems may use LSO or LYSO crystals as scintillation crystals, which contain an isotope Lu-176 and may generate the spontaneous background radiation. FIG. 8 is a schematic diagram illustrating a decay energy level of Lu-176. As shown in FIG. 8, decay of Lu-176 may include β decay and cascaded γ decay, which may occur simultaneously. A maximum energy of the β decay may be 589keV, and an energy of the γ decay may be 307 keV, 202 keV, or 88keV. Background radiation events (i.e., background coincidence events) may be identified based on the simultaneity and the definite energies of the β decay and γ decay. In some embodiments, the processing device 120 may obtain the background coincidence event data by collecting background radiation signals of an imaging device. In some embodiments, a background radiation energy (i.e., a background gamma decay energy) may be 307 keV, 202 keV, 88 keV, etc.

In some embodiments, the processing device 120 may obtain the background coincidence event data by identifying, from single event data of a plurality of single events generated during imaging the target object, the background coincidence event(s) using a first rule. The background coincidence events identified using the first rule may be referred to as a first plurality of background coincidence events.

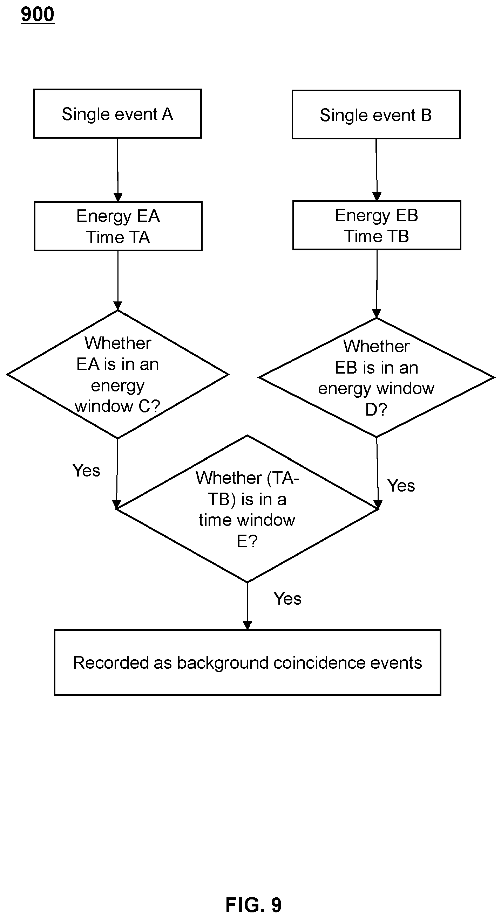

In some embodiments, the plurality of single events may include a first single event, a second single event, a third single event, and a fourth single event, and the first rule may include: in response to a determination that the second single event precedes the first single event in time, an energy of the first single event is in a first energy window, an energy of the second single event is in a second energy window, and a time difference between the first single event and the second single event is in a first time window, designating the first single event and the second single event as a background coincidence event. For example, the first rule may be as shown in process 900 in FIG. 9, and the processing device 120 may perform the process 900 to screen background coincidence events in the PET system. In some embodiments, the first single event and the second single event may be two single events that are adjacent in a time sequence but received by different detectors. The energy of the first single event may be located in an energy range of a background γ decay, e.g., 307 keV, 202 keV, 88 keV, etc. The energy of the second single event may be in an energy range of a background β decay, e.g., 589KeV, etc.

As shown in FIG. 9, the first single event includes a single event A, the second single event includes a single event B, the first energy window includes an energy window C, the second energy window includes an energy window D, and the first time window includes a time window E. At a certain moment, detector 1 may receive the single event A, and detector 2 may receive the single event B. An energy and an arrival time of the single event A may be EA and TA, respectively, an energy and an arrival time of the single event B may be EB and TB, respectively, and TA>TB (that is, the single event B occurs before the single event A). If the energy EA is in the energy window C, the energy EB is in the energy window D, and (TA-TB) is in the time window E, then the event may be recorded as a background coincidence event. The energy window C may be taken as [307*keV - 3a, 307keV +* 3*σ*], [202*keV -* 3σ*,* 202*keV +* 3*σ*], or [88*keV -* 3*a,* 88*keV +* 3*σ*]. *σ* may be a standard deviation of a Gaussian energy distribution of the system. The energy window D may be taken as [0*keV,* 1000*keV*]*.* The time window E may be taken as $\left[0,{ΔT}_{max}^{′}+3σ′\right]$, wherein ${ΔT}_{max}^{′}$ may be a maximum possible value of an absolute value of a time difference between a β decay and a γ ray reaching the detector, and *σ'* may be a standard deviation of the Gaussian time distribution of the system.

The target object may be also called a target scanned object, which refers to a scanned object of the imaging device, such as a living body, a phantom, etc. The living body may be a human body, a small animal, etc. The phantom may be a phantom of various materials or shapes, such as a water phantom, a gel material phantom, a wooden phantom, a cylinder, a cuboid, etc. In some embodiments, the target object may be a human body and/or a water phantom. The target coincidence event data refers to a coincidence event corresponding to an emission energy of a specific energy level. For example, the target coincidence event data may be a coincidence event corresponding to 511 keV, a coincidence event corresponding to 662 keV, or the like. In some embodiments, the processing device 120 may control the imaging device to scan the target object to obtain the target coincidence event data of the target object. For example, the processing device 120 may scan the water phantom and/or human body and the screen coincidence event corresponding to 511 keV among all coincidence events of the water phantom and/or human body. In some embodiments, the processing device 120 may obtain the background coincidence event data and/or target coincidence event data from a storage device or through other manners.

In some embodiments, the processing device 120 may obtain the target coincidence event data by identifying, from the single event data, the target coincidence event data using a second rule.

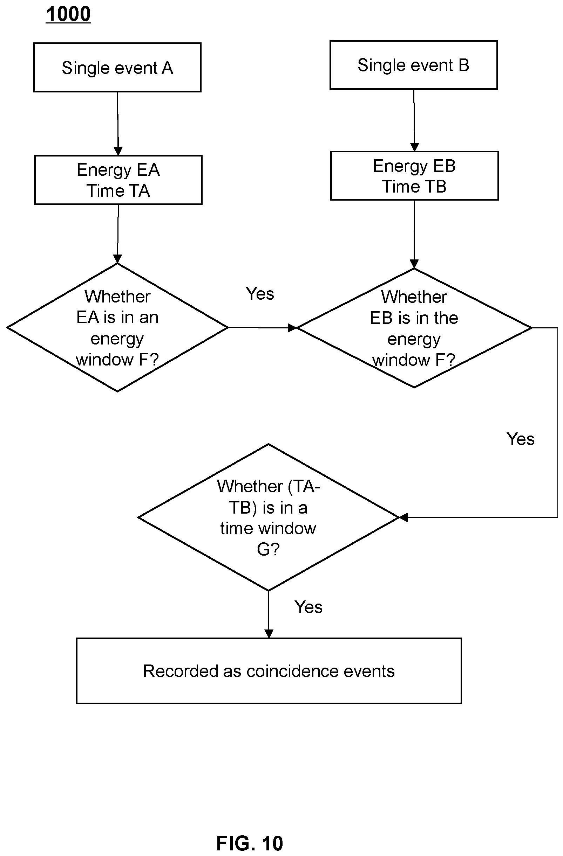

In some embodiments, the second rule may include: in response to a determination that the fourth single event precedes the third single event in time, an energy of the third single event and an energy of the fourth single event are both in a third energy window, and a time difference between the third single event and the fourth single event is in a second time window, designating the third single event and the fourth single event as a target coincidence event. For example, the second rule may be shown as a process 1000 in FIG. 10, and the processing device 120 may screen a coincidence event of electron-positron annihilation (that is, the target coincidence event) in the PET system by executing the process 1000. In some embodiments, the third single event and the fourth single event may be two single events that are adjacent in a time sequence but received by different detectors. Energies of the third single event and the fourth single event are both located in the energy range of the target coincidence event, e.g., 511 keV, or the like.

As shown in FIG. 10, the third single event includes a single event A, the fourth single event includes a single event B, the third energy window includes an energy window F, and the second time window includes a time window G. At a certain moment, detector 1 of the PET device may receive the single event A, and the detector 2 may receive the single event B. An energy and an arrival time of the single event A are EA and TA, respectively, an energy and an arrival time of the single event B are EB and TB, and TA>TB (i.e., the single event B occurs before the single event A). If both the energy EA and energy EB fall within the energy window F, and (TB-TA) is in the time window G, then the event is recorded as a target coincidence event. The energy window F may be taken as [511*keV* - 3*σ,* 511*keV +* 3*σ*]. *σ* may be a standard deviation of the Gaussian energy distribution of the system. The time window G may be taken as [-*ΔTₘₐₓ -* 3*σ'*, *ΔTₘₐₓ +* 3*σ*'], wherein, [*ΔTₘₐₓ*] may be a maximum possible value of an absolute value of a time difference between a pair of γ-rays with an energy of 511keV produced by annihilation of a pair of positive and negative electrons, and *σ'* may be a standard deviation of the Gaussian time distribution of the system.

In some embodiments, the processing device 120 may obtain the coincidence event data by collecting a coincidence event, wherein the coincidence event data may include an actually collected coincidence count, an energy of the coincidence event, or the like. In some embodiments, the processing device 120 may collect the background coincidence event data before, after, or simultaneously with the target coincidence event data. For example, the background coincidence event data may be collected first without injecting the patient with a drug, and the target coincidence event data may be collected after the drug is injected. As another example, the background coincidence event data and the target coincidence event data may be collected during an inspection process after the drug is injected into the patient. As a further example, the target coincidence event data may be collected after the drug is injected into the patient, and then the background coincidence event data may be collected after the patient is checked.

The same substance may have different attenuation coefficients for γ-rays with different energies. In some embodiments, in order to perform attenuation and scatter correction on the target coincidence event data, the processing device 120 may obtain a spatial distribution of an attenuation coefficient *µ* corresponding to the energy of 511 keV, and a relationship between the spatial distribution and the attenuation coefficient *µ* corresponding to the background gamma decay energy may be expressed by a following formula: $μ = kμ ′ ,$ (1) wherein, k is a constant. In some embodiments, k may be obtained by measuring an attenuation coefficient ${μ}_{H 2 O}^{′}$ of a certain substance (for example, water) to a γ ray with the energy of *E_{γ}* and an attenuation coefficient *µ*_{*H*2*O*} of the certain substance to a γ ray with an energy of 511keV, as shown in a following formula: $k = \frac{{μ}_{H 2 O}}{{μ}_{H 2 O}^{′}} .$ (2)

In 520, a target normalization correction factor may be obtained. In some embodiments, the operation 520 may be performed by the normalization correction factor obtaining module 220.

The target normalization correction factor is or includes information for correcting the coincidence event data (e.g., the background coincidence event data and the target coincidence event data), and may be represented by a value, a function, or the like. In some embodiments, the target normalization correction factor may include at least one of a reference normalization correction factor and a target normalization correction factor of the imaging device, etc. The reference normalization correction factor is used to correct the background coincidence event data, and the target normalization correction factor of the imaging device is used to correct the target coincidence event data.

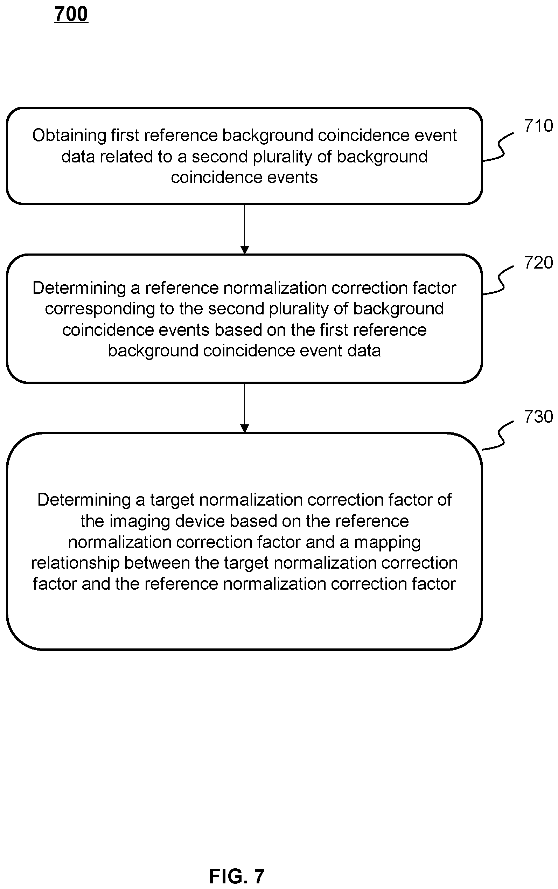

In some embodiments, the processing device 120 may obtain first reference background coincidence event data related to a second plurality of background coincidence events; determine a reference normalization correction factor corresponding to the second plurality of background coincidence events based on the first reference background coincidence event data; and determine the target normalization correction factor based on the reference normalization correction factor and a mapping relationship between the target normalization correction factor and the reference normalization correction factor. The background coincidence events relating to the first background coincidence event data may be referred to as the second plurality of background coincidence events. In some embodiments, the first plurality of background coincidence events and the second plurality of background coincidence events may be obtained in the same collection, or obtained in different collections. In some embodiments, the first plurality of background coincidence events and the second plurality of background coincidence events may be the same, or at least partially the same. In some embodiments, the first plurality of background coincidence events and the second plurality of background coincidence events may be completely different. For more information about the first reference background coincidence event data and how to determine the target normalization correction factor based on the first reference background coincidence event data, please refer to relevant descriptions in FIG. 7, which will not be repeated here.

In 530, the target coincidence event data may be corrected based on the target normalization correction factor. In some embodiments, the operation 530 may be performed by the data correction module 230.

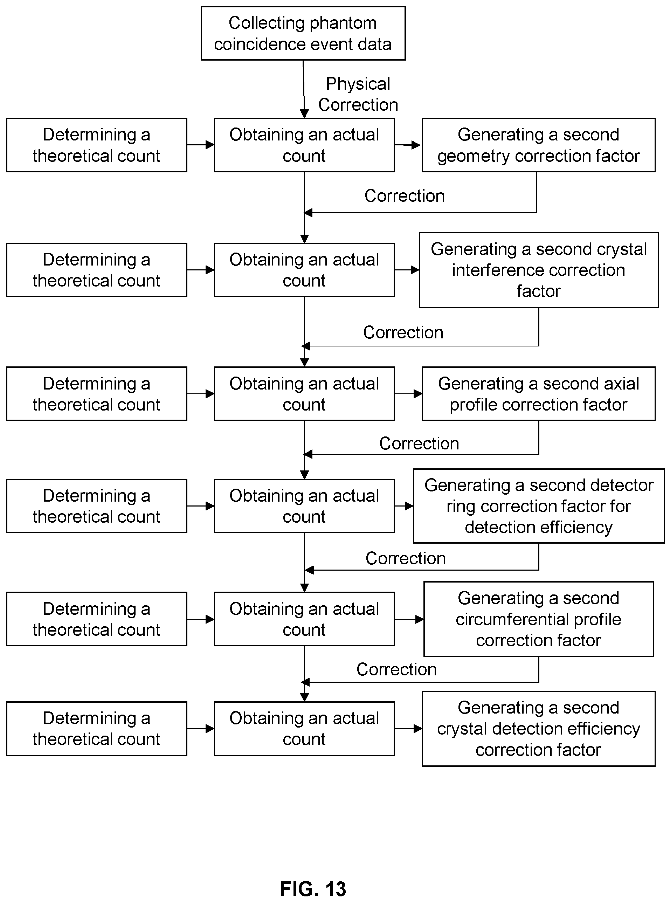

In some embodiments, the processing device 120 may correct the target coincidence event data using the plurality of target normalization correction factors corresponding to the second plurality of target coincidence events. For example, the processing device 120 may correct the target coincidence event data based on a plurality of second normalization correction factors (e.g., a second geometry correction factor, and a second crystal interference correction factor) shown in FIG. 13. In some embodiments, for more descriptions about how the processing device 120 corrects the target coincidence event data using the plurality of target normalization correction factors corresponding to the second plurality of target coincidence events, please refer to related descriptions of operations 620-630, which will not be repeated here.

In some embodiments, the processing device 120 may perform other correction(s) (e.g., attenuation correction, scatter correction, and physical correction) on the target coincidence event data based on the background coincidence event data. For more descriptions about how to perform the other correction(s) on the target coincidence event data based on the background coincidence event data, please refer to related descriptions of operations 620-630, which will not be repeated here.

In 540, a target image may be generated by performing image reconstruction based on the background coincidence event data and the corrected target coincidence event data. In some embodiments, the operation 540 may be performed by the image generation module 240.

The target image refers to a corrected image that meets user needs, e.g., an attenuation-corrected image, a scatter-corrected image, a noise-reduced image, or the like. In some embodiments, the target image may include an attenuation-corrected image or a scatter-corrected image.

In some embodiments, the processing device 120 may estimate an initial attenuation sinogram based on the background coincidence event data. For descriptions of how to estimate the initial attenuation sinogram based on the background coincidence event data, please refer to related descriptions of operation 620, which will not be repeated here.

In some embodiments, the processing device 120 may generate the target image by performing the image reconstruction based on the initial attenuation sinogram and the corrected target coincidence event data. For descriptions of how to generate the target image based on the initial attenuation sinogram and the corrected target coincidence event data, please refer to related descriptions of operation 630, which will not be repeated here.

In some embodiments, an operator of the imaging device may omit one or more operations in routine scanning by performing a correction (e.g., the normalization correction, the attenuation correction, the scatter correction, and the physical correction) on the target coincidence event data based on the background coincidence event data.

Taking PET-CT scanning as an example, in some embodiments, the operator of the imaging device may omit the operations of CT scanning and CT image reconstruction, and may simultaneously or sequentially collect the background coincidence event data and the target coincidence event data (which may be differentiated by energy and time), then correct the target coincidence event data based on the background coincidence event data, and generate a target image by performing image reconstruction based on the corrected target coincidence event data.

In the PET-CT scanning, due to reasons such as the movement of the patient during the scanning process, the CT reconstruction image and the PET reconstruction image may not be completely matched, so the operator needs to manually adjust the image for image matching in a conventional process. In some embodiments, the same device (i.e., the PET device) may be used to collect the background coincidence event data and the target coincidence event data. Furthermore, the background coincidence event data and the target coincidence event data may be collected simultaneously, and the obtained data can be better matched. Therefore, the operator may omit an operation of matching the CT reconstruction image and the PET reconstruction image.

In some embodiments, the operator may set collection parameters during the process of collecting the background coincidence event data and the target coincidence event data. For example, the operator may set a sequence of the background coincidence event data and the target coincidence event data, a collection energy level (e.g., 307 keV and 202 keV) of the background coincidence event data, and a collection time of the background coincidence event data. In some embodiments, the operator may set related parameters during the process of correcting the target coincidence event data and the process of image reconstruction. For example, the related parameters may include response line merging parameters, a count of iterations in the image reconstruction, or the like.

In some embodiments of the present disclosure, by correcting the target coincidence event data based on the background coincidence event data, the workload of scanning and reconstruction is reduced (for example, the CT scanning and reconstruction operations in PET-CT are removed, and operations of matching the CT reconstructed image with the PET reconstructed image is removed), which improves the imaging efficiency and ensures the quality of reconstructed images. At the same time, an amount of radiation during the examination is reduced by CT-free scanning, protecting the health of the operator and the patient.

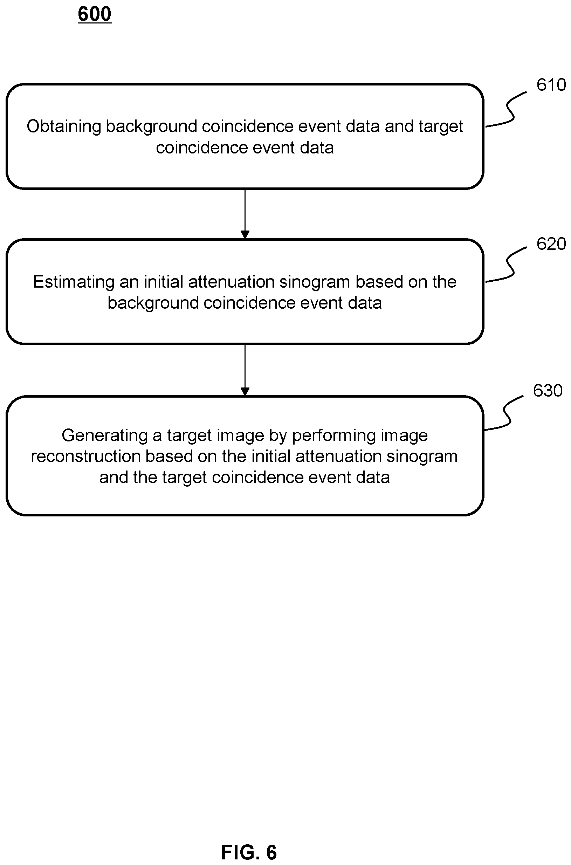

FIG. 6 is a flowchart illustrating another exemplary process for image reconstruction according to some embodiments of the present disclosure.

As shown in FIG. 6, a process 600 may include one or more of the following operations. In some embodiments, the process 600 may be performed by the processing device 120.

In 610, background coincidence event data and target coincidence event data may be obtained. The background coincidence event data may be related to a first plurality of background coincidence events, and the target coincidence event data may be related to a target object. In some embodiments, the operation 610 may be performed by the third data obtaining module 310.

For more descriptions of how to obtain the background coincidence event data and the target coincidence event data of the target object, refer to descriptions of the operation 510, which will not be repeated here.

In 620, an initial attenuation sinogram may be estimated based on the background coincidence event data. In some embodiments, the operation 620 may be performed by the sinogram generation module 320.

Due to the weak background signal relatively strength, in order to increase a count of background events received on a single response line and reduce statistical noise, in some embodiments, the processing device 120 may combine two or more original response lines into one combined response line. For example, the two or more original response lines may be formed by connecting two or more modules such as crystals. In some embodiments, the background coincidence event data may include background coincidence event data received by at least one composite response line.

In some embodiments, the processing device 120 may generate a target normalization correction factor corresponding to the background gamma photon energy by various manners (for example, a blank scan, a maximum likelihood estimation algorithm, etc.). That is, the processing device 120 may obtain the target normalization correction factor (e.g., a reference normalization correction factor, and a first normalization correction factor) corresponding to the background coincidence event based on the background coincidence event data. In some embodiments, the processing device 120 may use the target normalization correction factor corresponding to the background coincidence event to perform normalization correction on actual background coincidence event data (that is, an actual count of at least one portion of the second plurality of background coincidence events). The background coincidence event data may be processed by the normalization correction.

The blank scan refers to scanning without the target object such as a human body or a phantom. At this time, air may be regarded as the target object. In some embodiments, the processing device 120 may obtain the target coincidence event data using a blank scan of the imaging device, and the target coincidence event data obtained through the blank scan may also be referred to as blank scan data. In some embodiments, for any response line, the processing device 120 may divide a count of the target coincidence events obtained by the blank scan by an average value of a count of target coincidence events on all response lines to obtain the target normalization correction factor of the response line.

In some embodiments, the processing device 120 may obtain the target normalization correction factor through the maximum likelihood estimation algorithm.

In some embodiments, a likelihood function Lₜ of the background coincidence event data may be expressed by a following formula: ${L}_{t} \left(n′\right) = {\sum }_{i} \left[{y}_{i}^{′}log\left({\overline{y}}_{i}^{′}\right)-{\overline{y}}_{i}^{′}\right] ,$ (3) wherein, ${n}_{i}^{′}$ may represent detection efficiency of the response line to a background true event. A subscript i may represent a number of the response line. ${y}_{i}^{′}$ and ${\overline{y}}_{i}^{′}$ may represent a measured count and an expected count of background coincidence events on an i-th response line, respectively. ${\overline{y}}_{i}^{′}$ may represent a count of background coincidence events including background true events, background random events, and background scatter events, and the count of background coincidence events has experienced actual physical effects such as an attenuation effect and a detector detection efficiency effect.

In some embodiments, the measured count and the expected count of the background coincidence events on the i-th response line may be expressed by a following formula: ${\overline{y}}_{i}^{′} = {n}_{i}^{′} {b}_{i} + {s}_{i}^{′} ,$ (4) wherein *bᵢ* may represent the count of the background coincidence events on the i-th response line, including the count of the background true events; ${s}_{i}^{′}$ may denote an estimated count of background random events and background scatter events on the i-th response line; and n' may have the same meaning as in formula (3).

In some embodiments, assuming that background coincidence events are evenly distributed on all the response lines, a following formula is given: ${b}_{i} \approx \overline{b} = \frac{{\sum }_{i = 1}^{N} {b}_{i}}{N} ,$ (5) wherein *N* may be a total count of response lines; meaning of *bᵢ* is the same as in formula (4); and *b̅* may represent the average value of the counts of background coincidence events on all the response lines.

In some embodiments, based on formulas (3)-(5), the updating of response line detection efficiency *n* may be expressed as follows: ${n}_{i}^{′ k + 1} = {{n}_{i}^{′}}^{k} \frac{{y}_{i}^{′}}{{{n}_{i}^{′}}^{k} {b}_{i} + {s}_{i}^{′}} ,$ (6) wherein *k* may denote a count of iterations, and meanings of other symbols are the same as formulas (3)-(5).

In some embodiments, the target normalization correction factor ${NC}_{i}^{′}$ of any response line may be the reciprocal of the response line detection efficiency *nᵢ*, which may be expressed by a following formula: ${NC}_{i}^{′} = \frac{1}{{n}_{i}^{′}} .$ (7)

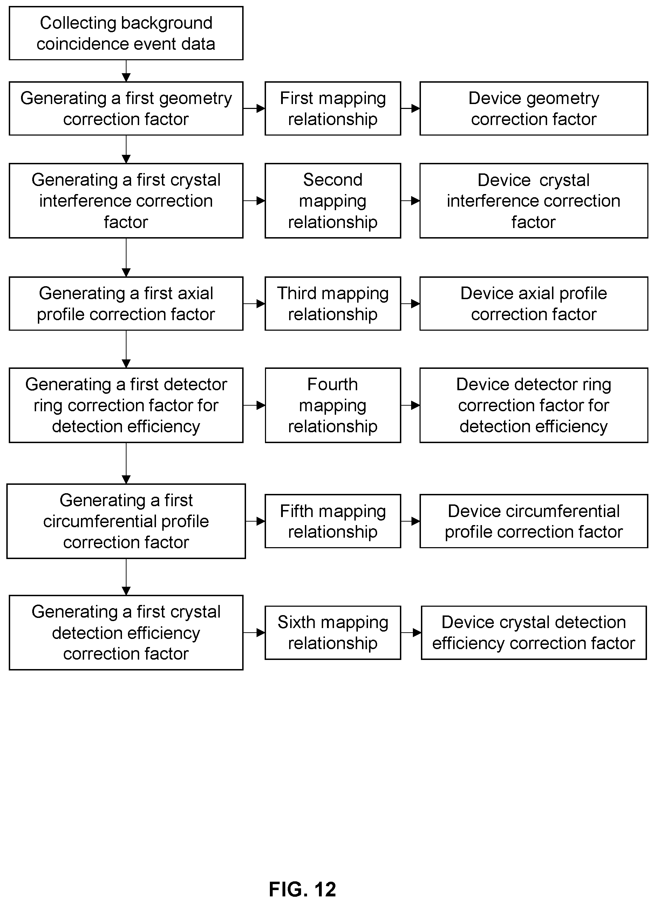

In some embodiments, the processing device 120 may obtain the target normalization correction factor corresponding to the background coincidence event data through other manners. For example, at least one first normalization correction factor may be obtained through the process shown in FIG. 12, correction factors in the at least one first normalization correction factor are multiplied, and a product is used as the target normalized value corresponding to the background coincidence event data. For more descriptions of how to obtain the at least one first normalization correction factor, refer to related descriptions in FIG. 12, which will not be repeated here.

In some embodiments, the processing device 120 may obtain the target normalization correction factor corresponding to a gamma photon with 511 keV in various ways, and perform normalization correction on the target coincidence event data through the target normalization correction factor. For example, at least one second normalization correction factor may be obtained through the process shown in FIG. 13, and the at least one second normalization correction factor may be designated as a target normalization correction factor corresponding to the gamma photon with 511 keV. For more descriptions of how to obtain the at least one second normalization correction factor, refer to related descriptions in FIG. 13, which will not be repeated here.

The initial attenuation sinogram is an attenuation sinogram corresponding to the background gamma photon energy, that is, an attenuation sinogram of the background coincidence event data. The attenuation sinogram may also be referred to as an attenuation effect sinogram, and the attenuation sinogram on any response line may be used to represent the attenuation effect on the response line. In some embodiments, the initial attenuation sinogram may be determined based on background coincidence event data using a maximum likelihood estimation algorithm.

In some embodiments, to obtain an initial attenuation sinogram, the processing device 120 may obtain a certain amount of background coincidence event data (e.g., background coincidence event data with 307 keV, 202 keV, or 88keV) by placing the scanned object, who has not been injected with radiopharmaceuticals, within a field of view of the PET system. The background coincidence event data may also be referred to as background transmission data. In some embodiments, the processing device 120 may collect the target coincidence event data (for example, the target coincidence event data with 511keV) of the scanned object (i.e., the target object).

In some embodiments, the likelihood function of the background coincidence event data or the background transmission data may be expressed by a following formula: ${L}_{t} \left(a\right) = {\sum }_{i} \left[{y}_{i}^{′}log\left({\overline{y}}_{i}^{′}\right)-{\overline{y}}_{i}^{′}\right] ,$ (8) wherein *a* may represent the attenuation sinogram corresponding to the gamma photon energy of 511keV. The subscript i may represent the number of the response line. ${y}_{i}^{′}$ and ${\overline{y}}_{i}^{′}$ may represent a measured count and an expected count of the background coincidence events on the i-th response line, respectively. ${\overline{y}}_{i}^{′}$ may represent a count of background coincidence events including background true events, background random events, and background scatter events, and the count of background coincidence events has experienced actual physical effects such as an attenuation effect and a detector detection efficiency effect.

In some embodiments, the measured count and the expected count of the background coincidence event on the i-th response line may be expressed by a following formula: ${\overline{y}}_{i}^{′} = {a}_{i}^{′} {b}_{i} + {s}_{i}^{′} = {{a}_{i}}^{η} {b}_{i} + {s}_{i}^{′} ,$ (9) wherein, *a* and *a'* may represent an attenuation sinogram corresponding to 511keV and an attenuation sinogram corresponding to the background gamma decay energy (e.g., 307 keV, 202 keV, or 88keV), respectively. *bᵢ* may represent the count of background coincidence events on the i-th response line, including the count of background true events. ${s}_{i}^{′}$ may represent the estimates of the count of background random events and the count of background scatter events (also referred as to background random estimation and background scatter estimation) on the i-th response line, where the background random estimation may be estimated from delayed coincidence event data, for example, using the delayed coincidence event data directly or using delayed coincidence event data obtained after noise reduction (for example, smoothing or other manners). A background scatter estimation image may be estimated using an analytical manner or Monte Carlo simulation manner.

In some embodiments, the relationship between an attenuation coefficient *µ* corresponding to 511keV and an attenuation coefficient *µ'* corresponding to the background gamma decay energy may be expressed by a following formula: $μ ′ = ημ ,$ (10) wherein *η* is the same in formulas (9) and (10), *η = 1*/*k, η* may denote a constant greater than 1, and k is the constant in formula (1).

In some embodiments, the attenuation sinogram corresponding to 511keV and the attenuation sinogram corresponding to the background gamma decay energy may be expressed by a following formula: ${a}_{i}^{′} = exp \left(-{\sum }_{j = 1}^{J} {l}_{ij} {μ}_{j}^{′}\right) = exp \left(-η{\sum }_{j = 1}^{J} {l}_{ij} {μ}_{j}\right) = {{a}_{i}}^{η} ,$ (11) wherein *l* may represent a system matrix without time of flight (TOF). The subscript i may represent the number of the response line. A subscript *j* may represent a number of a voxel, and meanings of other symbols are the same as in formulas (9)-(10).

In some embodiments, the processing device 120 may first estimate the attenuation sinogram ${a}_{i}^{′}$ corresponding to the background gamma photon energy using the maximum likelihood estimation algorithm, and then obtain the attenuation sonogram ${a}_{i} \left({\left({a}_{i}^{′}\right)}^{\frac{1}{η}}\right)$ corresponding to the gamma photon with 511keV.

In 630, the target image may be generated by performing image reconstruction based on the initial attenuation sinogram and the target coincidence event data. In some embodiments, the operation 630 may be performed by the image reconstruction module 630.

In some embodiments, the processing device 120 may perform the image reconstruction based on the initial attenuation sinogram and the target coincidence event data.

In some embodiments, the target coincidence event data may be processed by normalization correction. In some embodiments, the processing device 120 may correct actual target coincidence event data (i.e., an actual count) using at least one target normalization correction factor corresponding to the target coincidence event. For example, the processing device 120 may obtain at least one second normalization correction factor through a process shown in FIG. 13, multiply correction factors in the at least one second normalization correction factor, designate a product of the multiplication as a target normalization correction factor corresponding to the target coincidence event, and correct the actual count using the target normalization correction factor.

In some embodiments, the processing device 120 may update the attenuation sinogram (e.g., the initial attenuation sinogram) based on the background coincidence event data and/or the target coincidence event data. In some embodiments, the updating of the attenuation sinogram may be performed iteratively.

In some embodiments, the processing device 120 may obtain an updated initial attenuation sinogram by updating the initial attenuation sinogram using the maximum likelihood estimation algorithm based on the background coincidence event data. For example, the processing device 120 may update the initial attenuation sinogram based on formula (12) and formula (13).

In some embodiments, if *Lₜ* in formula (8) is a concave function, the attenuation sinogram (e.g., the initial attenuation sinogram) may be updated according to a following formula: ${{a}_{i}}^{k + 1} = {{a}_{i}}^{k} \frac{{y}_{i}^{′}}{{\left({{a}_{i}}^{k}\right)}^{η} {b}_{i} + {S}_{i}^{′}} ,$ (12) wherein *k* may denote a count of iterations, and meanings of other symbols are the same as in formulas (8)-(11).

In some embodiments, if *Lₜ* in formula (8) is a non-concave function, the attenuation sinogram may be updated according to a following formula: ${{a}_{i}}^{n + 1} = {\left[{{a}_{i}}^{n}-\frac{{\dot{h}}_{i} \left({{a}_{i}}^{n}\right)}{{{c}_{i}}^{n} \left({{a}_{i}}^{n}\right)}\right]}_{+} ,$ (13) wherein ${h}_{i} \left({a}_{i}\right) ≜ {y}_{i}^{′} log \left({{a}_{i}}^{η}{b}_{i}+{s}_{i}^{′}\right) - {{a}_{i}}^{η} {b}_{i} - {s}_{i}^{′}$, *cᵢⁿ*(*aᵢⁿ*) may represent a curvature of a replacement function (i.e., a proxy function) *qᵢⁿ*, in which ${{q}_{i}}^{n} \left({a}_{i}; {{a}_{i}}^{n}\right) ≜ {h}_{i} \left({{a}_{i}}^{n}\right) + {\dot{h}}_{i} \left({{a}_{i}}^{n}\right) \left({a}_{i}-{{a}_{i}}^{n}\right) + \frac{1}{2} {{c}_{i}}^{n} \left({{a}_{i}}^{n}\right) {\left({a}_{i}-{{a}_{i}}^{n}\right)}^{2}$ , n may denote the count of iterations. A subscript "+" outside the square brackets may mean that if a value in the square brackets is less than 0, *aᵢ*^{*n*+1} is equal to 0, otherwise it is equal to the value in the square brackets.

In some embodiments, the processing device 120 may obtain an updated attenuation sinogram by updating the attenuation sinogram (e.g., the initial attenuation sinogram) using the maximum likelihood estimation algorithm based on the background coincidence event data and the target coincidence event data (e.g., by updating the attenuation sinogram according to formula (19) and formula (21)). The target coincidence event data may be obtained by placing the scanned object injected with radiopharmaceuticals in the field of view of the PET system and then collecting the coincidence data, and the background coincidence event data may be collected simultaneously.

In some embodiments, the likelihood function of the target coincidence event data may be expressed by a following formula: ${L}_{e} \left(λ, a\right) = {\sum }_{it} \left[{y}_{it}log\left({\overline{y}}_{it}\right)-{\overline{y}}_{it}\right] ,$ (14) wherein, *λ* may represent an image; *a* may represent an attenuation sinogram corresponding to 511keV; the subscript *i* may represent the number of the response line; a subscript t may represent a number of a time window (TOF-bin); *yᵢₜ* and *y̅ᵢₜ* represent a measured count and an expected count of target coincidence events on a t-th time window (TOF-bin) of the i-th response line, respectively.

In some embodiments, the expected count *y̅ᵢₜ* of the target coincidence events on the t-th TOF-bin of the i-th response line may be expressed by a following formula: ${\overline{y}}_{it} = {a}_{i} {P}_{it} + {s}_{it} ,$ (15) wherein, *sᵢₜ* may represent an estimate of a sum of counts of scatter events and random events on the t-th TOF-bin of the i-th response line; *Pᵢₜ* may be a function, which is expressed in formula (17); and meanings of other symbols are the same as in formula (14).

In some embodiments, the attenuation sinogram corresponding to 511keV on the *i*-th response line may be expressed by a following formula: ${a}_{i} = exp \left(-{\sum }_{j = 1}^{J} {l}_{ij} {μ}_{j}\right) ,$ (16) wherein *µ* may represent the attenuation coefficient corresponding to 511keV; *l* may represent a system matrix without TOF; and the subscript *j* may represent the number of the voxel.

In some embodiments, *Pᵢₜ* in the formula (15) may be represented by a following formula: ${P}_{it} = {\sum }_{j = 1}^{J} {c}_{ijt} {λ}_{j} ,$ (17) wherein, c may represent a system matrix with TOF, and meanings of other symbols are the same as in formulas (14)-(16).

In some embodiments, the likelihood function of the background coincidence event data may be as shown in formulas (8)-(11). In some embodiments, a total likelihood function *L*(*λ, a*) may be obtained according to formulas (8)-(11) and formulas (14)-(17), which is as shown in a following formula: $L \left(λ, a\right) = {L}_{e} \left(λ, a\right) + {αL}_{t} \left(a\right) ,$ (18) wherein *α* may denote a constant greater than 0; *Lₑ*(*λ, a*) may represent the likelihood function of the target coincidence event data; *Lₜ*(*a*) may represent the likelihood function of the background coincidence event data, *Lₜ*(*a*) may mean that *a^{'}* in the formula (8) is replaced by *a.*

In some embodiments, if L in the formula (18) is a concave function, the updating of the attenuation sinogram may be expressed as follows: $\begin{matrix}{{a}_{i}}^{k + 1} = {{a}_{i}}^{k} + \frac{{{a}_{i}}^{k}}{{{P}_{i}}^{h}} {\left.\frac{\partial L}{\partial {a}_{i}}\right|}_{{a}^{k}} \\ = {{a}_{i}}^{k} \left[{\sum }_{t} \frac{{{P}_{it}}^{h}}{{{P}_{i}}^{h}} \frac{{y}_{it}}{{{a}_{i}}^{k} {{P}_{it}}^{h} + {s}_{it}} + \frac{{αb}_{i} η {\left({{a}_{i}}^{k}\right)}^{η - 1}}{{{P}_{i}}^{h}} \frac{{y}_{i}^{′}}{{\left({{a}_{i}}^{k}\right)}^{η} {b}_{i} + {s}_{i}^{′}} - \frac{{αb}_{i} η {\left({{a}_{i}}^{k}\right)}^{η - 1}}{{{P}_{i}}^{h}}\right] ,\end{matrix}$ (19) wherein *k* may denote the count of iterations, and meanings of other symbols are the same as in formulas (8)-(11) and formulas (14)-(17).

As shown in formula (19), in some embodiments, L in the formula (18) may be controlled as a concave function. The second-order derivative of L about aᵢ may be expressed as follows: $\begin{matrix}\frac{{\partial }^{2} L}{\partial {{a}_{i}}^{2}} = \frac{{\partial }^{2} {L}_{e}}{\partial {{a}_{i}}^{2}} + α \frac{{\partial }^{2} {L}_{t}}{\partial {{a}_{i}}^{2}} \\ = {\sum }_{t} - {{P}_{it}}^{2} \frac{{y}_{it}}{{{\overline{y}}_{it}}^{2}} + {αb}_{i} η \left(η-1\right) {{a}_{i}}^{η - 2} \frac{{y}_{i}^{′}}{{\overline{y}}_{i}^{′}} - {{αb}_{i}}^{2} {η}^{2} {{a}_{i}}^{2 η - 2} \frac{{y}_{i}^{′}}{{\overline{y}}_{i}^{′ 2}} - {αb}_{i} η \left(η-1\right) {{a}_{i}}^{η - 2} \\ = {\sum }_{t} - {{P}_{it}}^{2} \frac{{y}_{it}}{{{\overline{y}}_{it}}^{2}} + Kα ,\end{matrix}$ (20) wherein $K = {b}_{i} η \left(η-1\right) {{a}_{i}}^{η - 2} \frac{{y}_{i}^{′}}{{\overline{y}}_{i}^{′}} - {{b}_{i}}^{2} {η}^{2} {{a}_{i}}^{2 η - 2} \frac{{y}_{i}^{′}}{{\overline{y}}_{i}^{′ -}} - {b}_{i} η \left(η-1\right) {{a}_{i}}^{η - 2}$.

As shown in formula (19), in some embodiments, L in the formula (18) may be controlled as a concave function by adjusting *α.* Let $\frac{{\partial }^{2} L}{\partial {{a}_{i}}^{2}} = {\sum }_{t} - {{P}_{it}}^{2} \frac{{y}_{it}}{{{\overline{y}}_{it}}^{2}} + Kα \leq 0$, then if *K* ≥ 0, let $α \leq \frac{{\sum }_{t} {{P}_{it}}^{2} \frac{{y}_{it}}{{{\overline{y}}_{it}}^{2}}}{K}$ ; if *K* < 0, let $α > \frac{{\sum }_{t} {{P}_{it}}^{2} \frac{{y}_{it}}{{{\overline{y}}_{it}}^{2}}}{K}$.

In some embodiments, if L in the formula (18) is a non-concave function, the updating of the attenuation sinogram may be expressed as follows: ${{a}_{i}}^{n + 1} = {\left[{{a}_{i}}^{n}-\frac{{\dot{h}}_{i} \left({a}^{n}\right)}{{{c}_{i}}^{n} \left({{a}_{i}}^{n}\right)}\right]}_{+} ,$ (21) wherein ${h}_{i} \left(a\right) ≜ {\sum }_{t} \left[{y}_{it}log\left({a}_{i}{P}_{it}+{s}_{it}\right)-{a}_{i}{P}_{it}-{s}_{it}\right] + α \left[{y}_{i}^{′}log\left({{a}_{i}}^{η}{b}_{i}+{s}_{i}^{′}\right)-{{a}_{i}}^{η}{b}_{i}-{s}_{i}^{′}\right]$; *cᵢⁿ*(*aᵢⁿ*) is the curvature of the replacement function *qᵢⁿ*, in which ${{q}_{i}}^{n} \left(a; {{a}_{i}}^{n}\right) ≜ {h}_{i} \left({{a}_{i}}^{n}\right) + {\dot{h}}_{i} \left({{a}_{i}}^{n}\right) \left(a-{{a}_{i}}^{n}\right) + \frac{1}{2} {{c}_{i}}^{n} \left({{a}_{i}}^{n}\right) {\left(a-{{a}_{i}}^{n}\right)}^{2}$ *, n* may denote the count of iterations.

In some embodiments, the processing device 120 may perform attenuation correction on the target coincidence event data according to an attenuation effect correction factor obtained based on the attenuation sinogram.

In some embodiments, an attenuation effect correction factor *ACᵢ* of any response line may be a reciprocal of an attenuation effect of the response line, which may be expressed by a following formula: ${AC}_{i} = \frac{1}{{a}_{i}} ,$ (22) wherein *aᵢ* may represent the attenuation sinogram corresponding to 511keV.

In some embodiments, the processing device 120 may perform scatter correction on the target coincidence event data based on an attenuation sinogram of the target coincidence event data. In some embodiments, the processing device 120 may process the attenuation sinogram to obtain an attenuation map, and may perform a scatter estimation on the attenuation map to determine a scatter estimation image.

In some embodiments, the processing device 120 may perform a plurality of iterative operations until the scatter estimation image meets a preset termination condition. The iterative operations may include: updating an image based on the target coincidence event data, the random estimation, and a current scatter estimation image, wherein a first scatter estimation is 0, and the random estimation may be obtained directly from the delayed coincidence data, or after noise reduction; obtaining the scatter estimation image based on a previous image and a previous attenuation map using analytical calculation or Monte Carlo simulation; performing the scatter correction on the target coincidence event data based on the scatter estimation image; and comparing the scatter-corrected target coincidence event data with the target coincidence event data to obtain a magnification factor, and updating the scatter estimation image based on the magnification factor. In some embodiments, the preset termination condition may include at least of reaching a fixed count of iterations, a difference between images in two adjacent iterations being less than a preset threshold, a difference in attenuation maps between two adjacent iterations being less than a preset threshold, or a difference in scatter estimation images in adjacent iterations being less than a preset threshold.

The attenuation map is a reconstructed image obtained based on the attenuation sinogram, e.g., an attenuation coefficient spatial distribution map, etc. In some embodiments, the processing device 120 may convert the attenuation sinogram into an attenuation coefficient line-integrated sinogram and obtain the attenuation coefficient spatial distribution map by reconstruction through the attenuation coefficient line-integrated sinogram using an algorithm (e.g., maximum likelihood expectation maximization (MLEM), ordered subset expectation maximization (OSEM), etc.). In some embodiments, the attenuation coefficient spatial distribution map may be used for scatter estimation.

In some embodiments, the processing device 120 may obtain the attenuation coefficient line-integrated sinogram based on the attenuation sinogram of the target coincidence event data.

In some embodiments, the processing device 120 may obtain an attenuation coefficient line-integrated sinogram *ln*(*aᵢ*) based on the attenuation sinogram of 511keV according to the formula (16). The attenuation coefficient line-integrated sinogram *ln*(*aᵢ*) may be shown in a following formula: ${\sum }_{j = 1}^{J} {l}_{ij} {μ}_{j} = - ln \left({a}_{i}\right) ,$ (23) wherein meanings of symbols are the same as in the formula (16).

In some embodiments, the processing device 120 may perform physical correction (e.g., time-of-flight correction and/or measurement deviation correction) on the target coincidence event data based on the background coincidence event data. Specifically, the processing device 120 may obtain a physical correction factor (e.g., a time-of-flight correction factor and/or a measurement deviation correction factor) for the physical correction according to the background coincidence event data, and then perform the physical correction on the target coincidence event data based on the physical correction factor. In some embodiments, the processing device 120 may perform the time-of-flight correction before or after the normalization correction, attenuation correction, and/or scattering correction.

In traditional time-of-flight correction of the PET system, it may be necessary to use specific radioactive source(s) (e.g., a ring source) to process scan data to obtain the time-of-flight correction factor. The use of radioactive source(s) may increase a radiation dose and require specialized operator(s) to perform operation(s) (e.g., perfusion, positioning, etc.).

In some embodiments, the processing device 120 may obtain one or more time-of-flight correction factors for time-of-flight correction according to the background coincidence event data and/or then perform the time-of-flight correction on the target coincidence event data according to the time-of-flight correction factor.

In some embodiments, the processing device 120 may obtain the background coincident event data by the blank scan or the like and generate the time-of-flight correction factor based on the background coincident event data. In some embodiments, for the background coincident event data, it may be assumed that at a certain time T1, two different detectors 1 and 2 receive single events A and B, respectively, arrival times of the single events A and B are *TA_{b}* and *TB_{b},* respectively, and *TA_{b} > TB_{b}* (the single event B occurs before the single event A), that is, the single event A is γ decay, and the single event B is β decay. A time difference of the background coincident event may be defined as *T_{b} = TB_{b} - TA_{b},* where a subscript b represents the background coincident event. For a target coincidence event that needs to be calibrated, it may be assumed that at a certain time T2, the detectors 1 and 2 receive single events C and D, respectively, arrival times of the single events C and D are TA and TB, respectively, and a time difference of the target coincidence event may be defined as *ΔT = TB - TA.*

In some embodiments, the processing device 120 may obtain a plurality of forms of time-of-flight correction factors in various ways. For example, the processing device 120 may obtain the plurality of forms of time-of-flight correction factors based on a single response line or a plurality of original response lines, or based on a cone beam merged from the plurality of original response lines, etc.

In some embodiments, the processing device 120 may obtain the time-of-flight correction factor based on a single original response line. That is, when the processing device 120 calibrate the single original response line (connected by two crystals), a correction factor corresponding to the single original response line may be obtained. In some embodiments, the processing device 120 may combine a plurality of original response lines (each of which being connected by two crystals) into a combined response line (e.g., connected by two crystal modules), and obtain a correction factor corresponding the combined response line. In some embodiments, the time-of-flight correction factor obtained in the above process may be expressed as a following formula: ${ΔT}_{i} = {ΔT}_{i , r} + {Δt}_{i} ,$ (24) wherein i denotes the sequential number of the original response line or combined response line; *ΔT_{i,r}* denotes a time difference before correction; *Δtᵢ* denotes the time-of-flight correction factor; and *ΔTᵢ* denotes a time difference after the correction.

In some embodiments, the processing device 120 may merge a plurality of original response lines (each of which being connected by two crystals) originating from a same crystal into a cone beam, and obtain a correction factor corresponding to the each crystal. In some embodiments, the processing device 120 may merge a plurality of original response lines (each of which connected by two crystals) originating from a plurality of crystals (e.g., a crystal module) into a cone beam, and obtain a correction factor corresponding to the each combined crystal (e.g., the crystal module). In some embodiments, the time-of-flight correction factor obtained in the above process may be expressed as a following formula: ${T}_{k} = {T}_{k , r} + {t}_{k} ,$ (25) wherein k denotes a sequential number of the crystal or combined crystal; *T_{k,r}* denotes an arrival time before correction; *tₖ* denotes the time-of-flight correction factor; and *Tₖ* denotes an arrival time after the correction.

In some embodiments, the processing device 120 may obtain an ideal time difference of the background coincidence event through various manners, e.g., algorithm(s) such as Monte Carlo simulation, machine learning model(s), or the like. In some embodiments, the processing device 120 may obtain an ideal time difference distribution of the background coincidence events through Monte Carlo simulation and then obtain the ideal time difference (denoted as *ΔT̃_{b,i}* or *ΔT̃_{b,k}*) after processing the ideal time difference distribution through a peak-finding algorithm (e.g., Gaussian fitting, etc.), wherein i denotes the sequential number of the original response line or combined response line, and k denotes the sequential number of the crystal or combined crystal.

In some embodiments, the processing device 120 may obtain an actual time difference distribution of the background coincidence event based on the obtained background coincidence event data and then obtain an actual time difference (denoted as *ΔT_{b,i}* or *ΔT_{b,k}*) after processing the actual time difference distribution using a peak-finding algorithm (e.g., Gaussian fitting, etc.), wherein i denotes the sequential number of the original response line or combined response line, and k denotes the sequential number of the crystal or combined crystal.

In some embodiments, the processing device 120 may calculate the time-of-flight correction factor based on the ideal time difference and the actual time difference of the background coincident event(s). Corresponding to formula (24), the time-of-flight correction factor may be shown as a following formula: ${Δt}_{i} = Δ {{T}^{˜}}_{b , i} - {ΔT}_{b , i}$ (26)
wherein i denotes the sequential number of the original response line or combined response line; *ΔT̃_{b,i}* denotes the ideal time difference; *ΔT_{b,i}* denotes the actual time difference; and meaning of *Δtᵢ* is the same as that in formula (24), which denotes the flight time correction factor. Corresponding to formula (25), the time-of-flight correction factor may be shown as a following formula: ${t}_{k} = Δ {{T}^{˜}}_{b , k} - {ΔT}_{b , k}$ (27)
wherein k denotes the sequential number of the crystal or combined crystal; *ΔT̃_{b,k}* denotes the ideal time difference; *ΔT_{b,k}* denotes the actual time difference; the meaning of *tₖ* is the same as that in formula (25), which denotes the time-of-flight correction factor.

In some embodiments, the processing device 120 may generate the target image of the target object by performing the image reconstruction on the time-of-flight-corrected target coincidence event data.

In some embodiments of the present disclosure, by obtaining the time-of-flight correction factor based on the background coincidence event data, the time-of-flight may be corrected without the use of a specific radioactive source, thereby reducing the radiation dose received by the user (e.g., operator(s), etc.) and reducing radiation damage to the user.

In some embodiments, the processing device 120 may generate the target image of the target object by performing the image reconstruction based on the target coincidence event data and the initial attenuation sinogram of the target object. In some embodiments, the processing device 120 may obtain an initial image by performing initial image reconstruction according to the target coincidence event data. The initial image may refer to a first reconstructed image without being processed using any correction (e.g., attenuation correction, scatter correction, or time-of-flight correction) or image updating. The initial image may also be a first reconstructed image after correction (e.g., time-of-flight correction, etc.). In some embodiments, the processing device 120 may update a reconstructed image (e.g., an initial image and an updated initial image) to obtain an updated reconstructed image.

In some embodiments, the processing device 120 may update the reconstructed image according to a following formula: ${{λ}_{j}}^{h + 1} = \frac{{{λ}_{j}}^{h}}{{\sum }_{i} {c}_{ij} {{a}_{i}}^{k + 1} {n}_{i}} {\sum }_{it} {c}_{ijt} {{a}_{i}}^{k + 1} {n}_{i} \frac{{y}_{it}}{{\sum }_{ξ} {c}_{iξt} {{a}_{i}}^{k + 1} {n}_{i} {{λ}_{ξ}}^{h} + {s}_{it}} ,$ (28) wherein *h* may represent the count of iterations; *λ* may represent the reconstructed image; *ξ* may represent the number of the voxel, and meanings of other symbols are the same as in the formulas (8)-(11) and formulas (14)-(17).

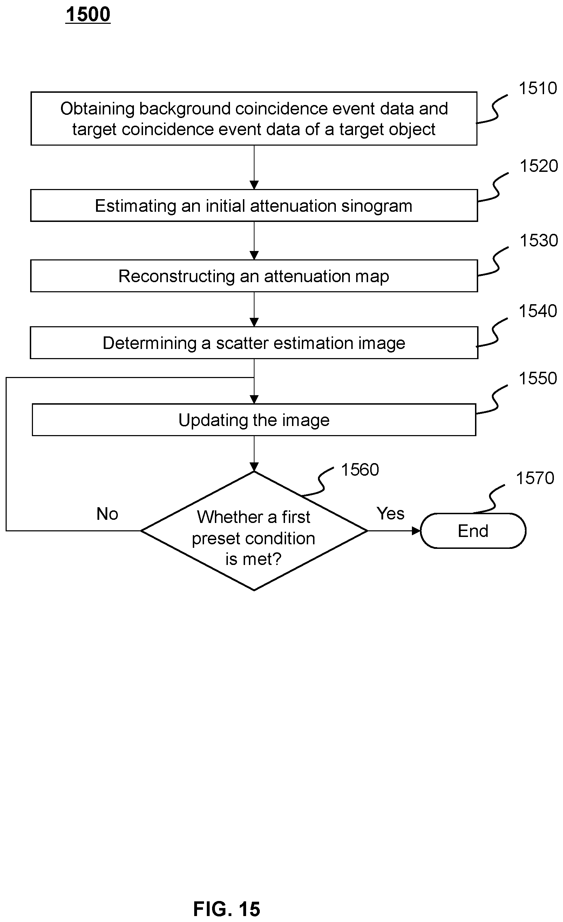

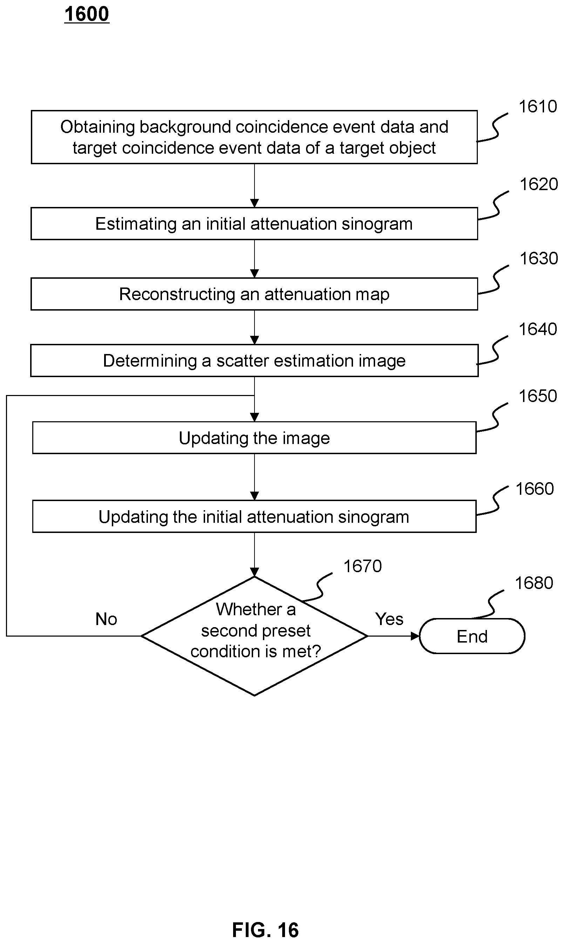

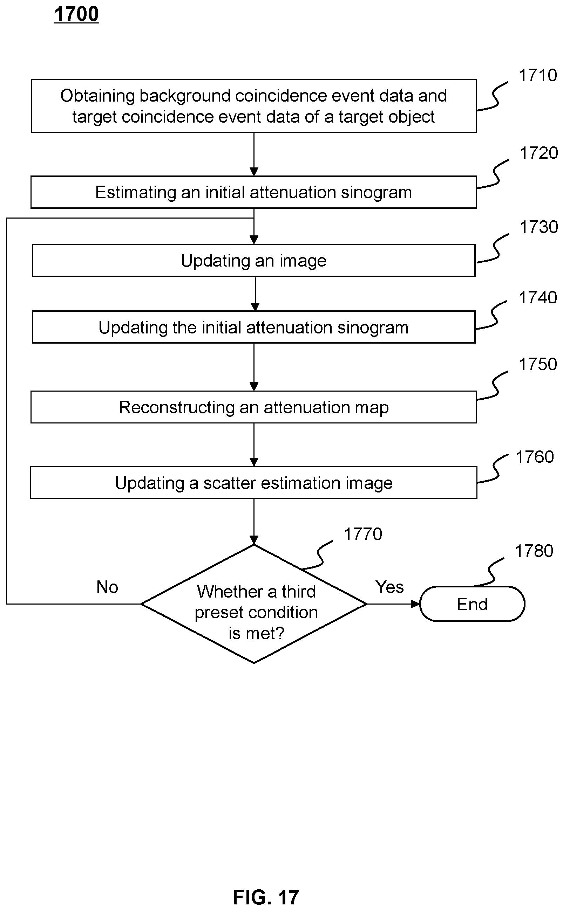

In some embodiments, the processing device 120 may iteratively update the initial image to generate the target image. In some embodiments, while iteratively updating the initial image, the processing device 120 may also iteratively update at least one of the initial attenuation sinogram, the attenuation map, the scatter estimation image, or the like. Merely by way of example, as shown in FIG. 15, the processing device 120 may iteratively update an image by performing operation 1550 in a loop; as shown in FIG. 16, the processing device 120 may iteratively update the image and the initial attenuation sinogram by performing operations 1650 and 1660 in a loop; and as shown in FIG. 17, the processing device 120 may iteratively update the image, the initial attenuation sinogram, the attenuation map, and the scatter estimation image by performing operations 1730-1760 in a loop.

In some embodiments, the processing device 120 may stop the iterative updating when a predetermined iteration termination condition is met. The predetermined iteration termination condition may include reaching a fixed count of iterations, a difference between images in two adjacent iterations being less than a certain threshold, a difference between attenuation effect sinograms in two adjacent iterations being less than a certain threshold, or the like.

In some embodiments, the processing device 120 may perform the image reconstruction to generate the target image using a machine learning model (e.g., a neural network model). An input of the model may include the background coincidence event data and the target coincidence event data of the target object, and an output of the model may include the reconstructed image, that is, the target image.

In some embodiments, training samples of the model may include background coincidence event data samples and target coincidence event data samples of a sample object, and training labels may include target image samples. The processing device 120 may input the background coincidence event data samples and target coincidence event data samples into an untrained initial model, and obtain reconstructed images output by the untrained initial model. The processing device 120 may compare the reconstructed images with the target image samples, iteratively update model parameters according to a comparison result, thereby obtaining a trained model.

In some embodiments of the present disclosure, the initial attenuation sinogram and the target normalization correction factor may be obtained based on the background coincidence event data, PET data may be normalized and corrected based on the target normalization correction factor, and the attenuation correction, scatter correction, and image updating operations may be performed on the PET data based on the target coincidence event data and the initial attenuation sinogram, which solves problems of attenuation, scatter, and normalization correction of the PET data without CT, and enables image reconstruction without relying on CT scan data, thereby removing radiation damage from CT scanning, simplifying a scan operation process, reducing a scan time, and reducing radiation damage to patients and device operators from an overall PET system. The quality of the reconstructed image is greatly improved through a plurality of iterative updating of the image, so that a final image can well meet diagnostic requirements.

FIG. 7 is a flowchart illustrating an exemplary process for correcting an imaging device according to some embodiments of the present disclosure.

As shown in FIG. 7, a process 700 may include one or more of the following operations. In some embodiments, the process 700 may be performed by the processing device 120.

In 710, first reference background coincidence event data related to a second plurality of background coincidence events may be obtained. In some embodiments, the operation 710 may be performed by the second data obtaining module 410.

The first reference background coincidence event data may refer to background coincidence event data obtained when scanning an object (e.g., a patient), that is, background coincidence event data obtained by an imaging device during a diagnostic application process. Second reference background coincidence event data may refer to background coincidence event data obtained in a obtaining process of a target normalization correction factor of the imaging device, that is, background coincidence event data obtained during a calibration process of the target normalization correction factor of the imaging device. In some embodiments, the processing device 120 may obtain and collect the background coincidence event data by collecting background radiation signals of the imaging device. Phantom coincidence event data may refer to target coincidence event data in which a target object is a phantom (e.g., a water phantom, a gel material phantom, etc.). In some embodiments, the processing device 120 may obtain and collect the phantom coincidence event data by scanning the phantom with the imaging device. In some embodiments, during the calibration process of the target normalization correction factor of the imaging device, the processing device 120 may obtain the second reference background coincidence event data and phantom coincidence event data. In some embodiments, when the imaging device scans the patient, the processing device 120 may obtain the first reference background coincidence event data and the target coincidence event data. In some embodiments, before the imaging device scans the patient, the processing device 120 may obtain the target normalization correction factor of the imaging device through the calibration process of the target normalization correction factor of the imaging device.

In some embodiments, the processing device 120 may collect the second reference background coincidence event data before, after, or simultaneously with the phantom coincidence event data. For more descriptions of how to obtain the background coincidence event data and the phantom coincidence event data, please refer to the descriptions of the operation 510, which will not be repeated here.

In 720, a reference normalization correction factor corresponding to the second plurality of background coincidence events may be determined based on the first reference background coincidence event data. In some embodiments, the operation 720 may be performed by the event correction factor obtaining module 420.

The reference normalization correction factor may be a target normalization correction factor corresponding to the second plurality of background coincidence events in the first reference background coincidence event data. The reference normalization correction factor may be used to perform normalization correction on the first reference background coincidence event data. A first normalization correction factor may be a target normalization correction factor corresponding to a second plurality of background coincidence events in the second reference background coincidence event data. At least one first normalization correction factor may be used to perform normalization correction on the second reference background coincidence event data. In some embodiments, the target normalization correction factor may be decomposed into at least two terms based on a component normalization correction algorithm. In some embodiments, the at least one first normalization correction factor may include at least one of a first geometry correction factor, a first crystal interference correction factor, a first axial profile correction factor, a first detector ring correction factor for detection efficiency, a first circumferential profile correction factor, and a first crystal detection efficiency correction factor.

In some embodiments, the processing device 120 may determine the target normalization correction factor corresponding to the second plurality of background coincidence events based on the background coincidence event data (e.g., the first reference background coincidence event data and the second reference background coincidence event data). For example, the reference normalization correction factor may be determined based on the first reference background coincidence event data. As another example, the at least one first normalization correction factor may be determined based on the second reference background coincidence event data.

In some embodiments, the processing device 120 may perform a plurality of iterative operations until the at least one first normalization correction factor is determined. Each of the plurality of iterative operations may be performed to determine a current first correction factor of the at least one first normalization correction factor among the first geometry correction factor, the first crystal interference correction factor, the first axial profile correction factor, the first detector ring correction factor for detection efficiency, the first circumferential profile correction factor, and the first crystal detection efficiency correction factor. In some embodiments, each of the plurality of iterative operations may include: obtaining an actual count of at least one portion of the second plurality of background coincidence events corresponding to the current first correction factor based on the second reference background coincidence event data; determining a theoretical count of the at least one portion of the second plurality of background coincidence events corresponding to the current first correction factor; determining the current first correction factor based on the actual count and the theoretical count to obtain a determined current first correction factor; and in response to a determination that at least one of the at least one first normalization correction factor is undetermined, correcting the actual count corresponding to the second reference background coincidence event data based on the determined current first correction factor.

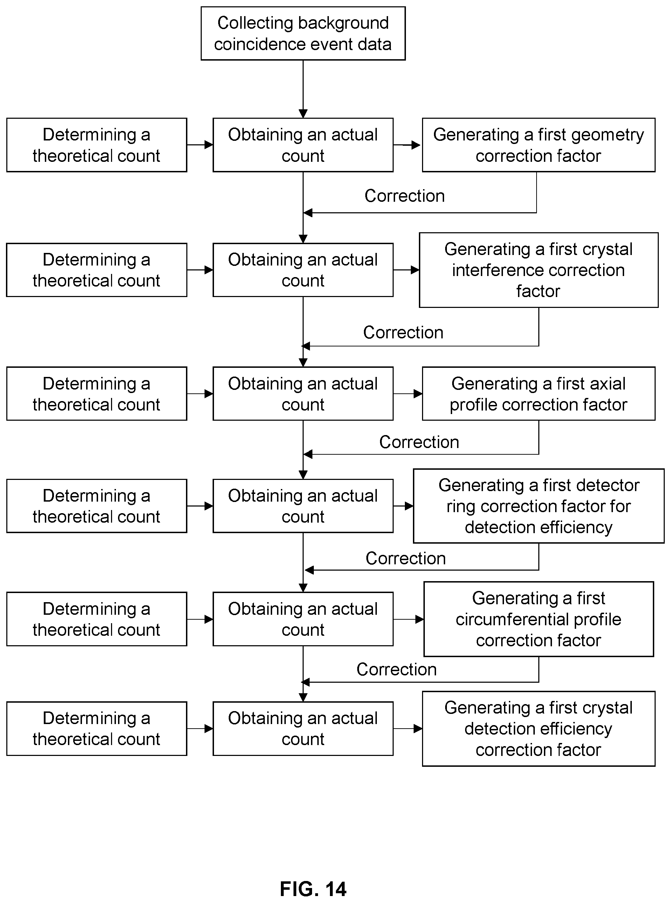

As shown in FIG. 14, after collecting the background coincidence event data, the processing device 120 may obtain the actual count; calculate the theoretical count; generate the first geometry correction factor based on the theoretical count and the actual count; and correct the actual count using the first geometry correction factor. The processing device 120 may perform the above iterative operations to obtain the first crystal interference correction factor, the first axial profile correction factor, the first detector ring correction factor for detection efficiency, the first circumferential profile correction factor, and/or the first crystal detection efficiency correction factor. The actual count used in each round of the plurality of iterative operations is an actual count corrected by the first normalization correction factor obtained in a previous round. For example, the actual count corrected by the first geometry correction factor may be used for generating the first crystal interference correction factor. As another example, the actual count corrected by the first crystal interference correction factor may be used for generating the first axial profile correction factor.

A second normalization correction factor is a target normalization correction factor corresponding to a gamma photon with 511keV, that is, the target normalization correction factor corresponding to the phantom coincidence event data, which may be used to perform normalization correction on the target coincidence event data, wherein the target object may be a human body or a phantom. In some embodiments, at least one second normalization correction factor may include at least one of a second geometry correction factor, a second crystal interference correction factor, a second axial profile correction factor, a second detector ring correction factor for detection efficiency, a second circumferential profile correction factor, and a second crystal detection efficiency correction factor. In some embodiments, the at least one second normalization correction factor may include a correction factor corresponding to each correction factor in the at least one first normalization correction factor. For example, the at least one second normalization correction factor may include the second geometry correction factor corresponding to the first geometry correction factor, the second crystal interference correction factor corresponding to the first crystal interference correction factor, or the like.

Elements corresponding to different correction factors in the determination of the count of the background coincidence events included in the target normalization correction factor(s) are not the same. Therefore, in the process of iteratively determining the at least one first normalization correction factor and the at least one second normalization correction factor, the actual counts of the background coincidence events used for different rounds of iterations may actually correspond to different elements, and theoretical counts of the background coincidence events also correspond to the different elements.

In some embodiments, the processing device 120 may determine at least one second normalization correction factor corresponding to a plurality of phantom coincidence events based on the phantom coincidence event data.

In some embodiments, the processing device 120 may perform a plurality of iterative operations until the at least one second normalization correction factor is determined. In some embodiments, each of the plurality of iterative operations may be performed to determine a current second correction factor of the at least one second normalization correction factor among the second geometry correction factor, the second crystal interference correction factor, the second axial profile correction factor, the second detector ring correction factor for detection efficiency, the second circumferential profile correction factor, and the second crystal detection efficiency correction factor. In some embodiments, each of the plurality of iterative operations may include: obtaining an actual count of at least one portion of the plurality of phantom coincidence events corresponding to the current second correction factor by performing physical correction on the phantom coincidence event data; determining a theoretical count of the at least one portion of the plurality of phantom coincidence events corresponding to the current second correction factor; and determining the current second correction factor based on the actual count and the theoretical count to obtain a determined current second correction factor, wherein in response to a determination that at least one of the at least one second normalization correction factor is undetermined, correcting the actual count corresponding to the phantom coincidence event data based on the determined current second correction factor.

As shown in FIG. 13, after collecting the phantom coincidence event data, the processing device 120 may perform physical correction (e.g., measurement deviation correction) on the phantom coincidence event data to obtain the actual count; calculate the theoretical count; generate the second geometry correction factor based on the theoretical count and the actual count; and correct the actual count using the second geometry correction factor. The processing device 120 may perform the above iterative operations to obtain the second crystal interference correction factor, the second axial profile correction factor, the second detector ring correction factor for detection efficiency, the second circumferential profile correction factor, and the second crystal detection efficiency correction factor. The actual count used in each round of the plurality of iterative operations is an actual count corrected by the second normalization correction factor obtained in a previous round. For example, the actual count corrected by the second geometry correction factor may be used in generating the second crystal interference correction factor. As another example, the actual count corrected by the second crystal interference correction factor may be used in generating the second axial profile correction factor.

In some embodiments, the processing device 120 may determine a mapping relationship between the at least one first normalization correction factor and the at least one second normalization correction factor based on the at least one first normalization correction factor and the at least one second normalization correction factor. The mapping relationship may represent a corresponding relationship between the at least one first normalization correction factor and the at least one second normalization correction factor. In some embodiments, during the calibration process of the normalization factor of the imaging device, the processing device 120 may obtain the at least one first normalization correction factor based on the second reference background coincidence event data, and obtain the at least one second normalization correction factor based on the phantom coincidence event data, and then determine the mapping relationship between the at least one first normalization correction factor and the at least one second normalization correction factor.

In some embodiments, the mapping relationship between the at least one first normalization correction factor and the at least one second normalization correction factor may include a correspondence between each item in the at least one first normalization correction factor and a corresponding item in the at least one second normalization correction factor. In some embodiments, the mapping relationship between the at least one first normalization correction factor and the at least one second normalization correction factor may include at least one of a first mapping relationship, a second mapping relationship, a third mapping relationship, a fourth mapping relationship, a fifth mapping relationship, and a sixth mapping relationship. The first mapping relationship may include a relationship between the first geometry correction factor and the second geometry correction factor. The second mapping relationship may include a relationship between the first crystal interference correction factor and the second crystal interference correction factor. The third mapping relationship may include a relationship between the first axial profile correction factor and the second axial profile correction factor. The fourth mapping relationship may include a relationship between the first detector ring correction factor for detection efficiency and the second detector ring correction factor for detection efficiency. The fifth mapping relationship may include a relationship between the first circumferential profile correction factor and the second circumferential profile correction factor. The sixth mapping relationship may include a relationship between the first crystal detection efficiency correction factor and the second crystal detection efficiency correction factor.

In some embodiments, the processing device 120 may use various manners (for example, curve fitting, interpolation, other manners, etc.) to obtain the mapping relationship between the each item in the at least one first normalization correction factor and a corresponding item in the at least one second normalization correction factor.

In some embodiments, the mapping relationship between the at least one first normalization correction factor and the at least one second normalization correction factor may be represented by a ratio of the at least one first normalization correction factor to the at least one second normalization correction factor. For example, the first mapping relationship may be a ratio of the first geometry correction factor to the second geometry correction factor, or a ratio of the second geometry correction factor to the first geometry correction factor.

In some embodiments, the mapping relationship between the at least one first normalization correction factor and the at least one second normalization correction factor may be in a discrete form (i.e., values of the at least one first normalization correction factor and values of the at least one second normalization correction factor may have a discontinuous correspondence). In some embodiments, the mapping relationship between the at least one first normalization correction factor and the at least one second normalization correction factor may be represented by a function or a continuous function curve.

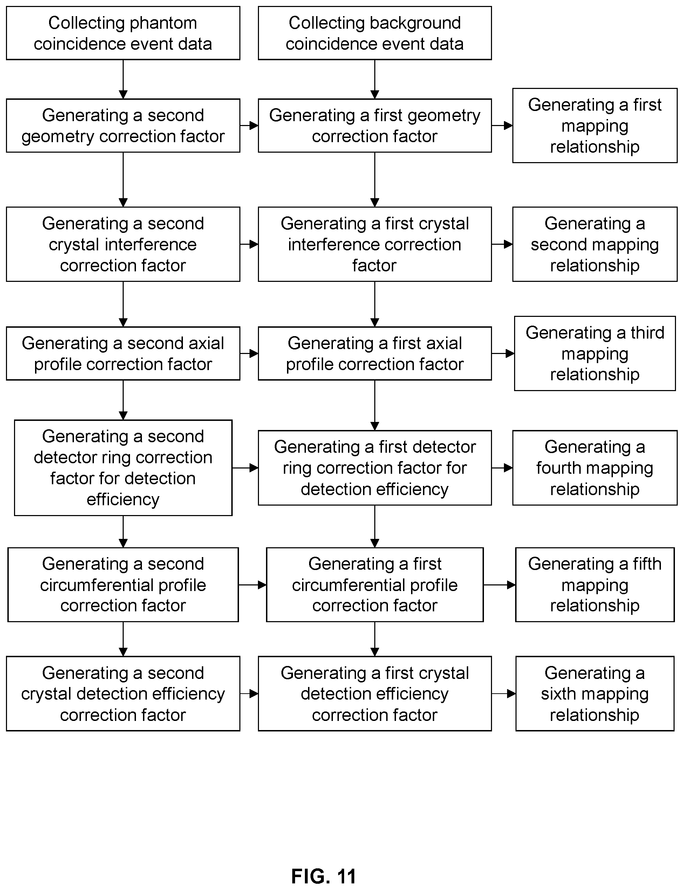

In some embodiments, the processing device 120 may determine the mapping relationship between the determined item in the at least one first normalization correction factor and a corresponding determined item in the at least one second normalization correction factor. As shown in FIG. 11, after collecting the phantom coincidence event data, the processing device 120 may generate the second geometry correction factor, the second crystal interference correction factor, the second axial profile correction factor, the second detector ring correction factor for detection efficiency, the second circumferential profile correction factor, and the second crystal detection efficiency correction factor. After collecting the background coincidence event data, the processing device 120 may generate the first geometry correction factor, the first crystal interference correction factor, the first axial profile correction factor, the first detector ring correction factor for detection efficiency, the first circumferential profile correction factor, and the first crystal detection efficiency correction factor. After determining the at least one first normalization correction factor and the at least one second normalization correction factors, the processing device 120 may generate the mapping relationship between the each item in the at least one first normalization correction factor and a corresponding item in the at least one second normalization correction factor. For example, the first mapping relationship may be generated based on the second geometry correction factor and the first geometry correction factor. As another example, the second mapping relationship may be generated based on the second crystal interference correction factor and the first crystal interference correction factor.

In some embodiments, the processing device 120 may determine the mapping relationship between the first normalization correction factor and the second normalization correction factor through a machine learning model (e.g., a neural network model, etc.). An input of the model may include the phantom coincidence event data and background coincidence event data, and an output of the model may include a mapping relationship corresponding to the each item in the at least one first normalization correction factor and a corresponding item in the at least one second normalization correction factor, for example, at least one of the first mapping relationship, the second mapping relationship, the third mapping relationship, the fourth mapping relationship, the fifth mapping relationship, and the sixth mapping relationship.

In some embodiments, the machine learning model used to determine the mapping relationship may include a single-task model or a multi-task model. The single-task model may output at least one of the first mapping relationship, the second mapping relationship, the third mapping relationship, the fourth mapping relationship, the fifth mapping relationship, and the sixth mapping relationship. The multi-task model may output at least two of the first mapping relationship, the second mapping relationship, the third mapping relationship, the fourth mapping relationship, the fifth mapping relationship, and the sixth mapping relationship. In some embodiments, training samples of the model may include phantom coincidence event data samples and background coincidence event data samples, and the training labels may include mapping relationship samples corresponding to the training samples. The processing device 120 may input the phantom coincidence event data samples and background coincidence event data samples into an untrained initial model, obtain a mapping relationship result output by the untrained initial model, compare the mapping relationship result with a corresponding mapping relationship sample, and iteratively update model parameters according to a comparison result, so as to obtain a trained model.

In 730, a target normalization correction factor of the imaging device may be determined based on the reference normalization correction factor and a mapping relationship between the target normalization correction factor and the reference normalization correction factor. In some embodiments, the operation 730 may be performed by the device correction factor determination module 430.

The target normalization correction factor of the imaging device may refer to a correction factor used directly for normalization correction on target coincidence event data (for example, the phantom coincidence event data or the target coincidence event data). In some embodiments, during clinical scanning of the imaging device, the reference normalization correction factor may be regarded as equivalent to the at least one first normalization correction factor determined in the calibration process of the imaging device. In some embodiments, the target normalization correction factor of the imaging device may include at least one correction factor, wherein each of the at least one correction factor corresponds to each of the at least one first normalization correction factor. In some embodiments, the target normalization correction factor of the imaging device may include at least of a device geometry correction factor, a device crystal interference correction factor, a device axial profile correction factor, a device detector ring correction factor for detection efficiency, a device circumferential profile correction factor, and a device crystal detection efficiency correction factor.

In some embodiments, the processing device 120 may determine the target normalization correction factor of the imaging device based on the at least one first normalization correction factor and the mapping relationship. For example, the mapping relationship may be represented as a function image, wherein the abscissa or ordinate of the function image may express the first geometry correction factor, and the ordinate or abscissa corresponding to the first normalization correction factor may be determined as the target normalization correction factor of the imaging device. As another example, the mapping relationship may be or include a ratio of the second normalization correction factor to the first normalization correction factor, then a product of the first normalization correction factor and the mapping relationship may be determined as the target normalization correction factor of the imaging device. In some embodiments, the processing device 120 may obtain the mapping relationship between the first normalization correction factor and the second normalization correction factor through the calibration process of the target normalization correction factor of the imaging device. In some embodiments, the processing device 120 may obtain a reference normalization correction factor based on the first reference background coincidence event data obtained when the imaging device scans the patient, and then determine the target normalization correction factor of the imaging device based on the reference normalization correction factor and the mapping relationship, wherein the reference normalization correction factor may correspond to the first normalization correction factor in the mapping relationship, and the target normalization correction factor of the imaging device may correspond to the second normalization correction factor in the mapping relationship.

In some embodiments, the processing device 120 may determine a correction factor in the target normalization correction factor(s) of the imaging device based on a corresponding correction factor in the at least one first normalization correction factor and a corresponding mapping relationship. As shown in FIG. 12, after collecting the background coincidence event data, the processing device 120 may generate the first geometry correction factor, the first crystal interference correction factor, the first axial profile correction factor, the first detector ring correction factor for detection efficiency, the first circumferential profile correction factor, and the first crystal detection efficiency correction factor based on the background coincidence event data, and determine the device geometry correction factor, the device crystal interference correction factor, the device axial profile correction factor, the device detector ring correction factor for detection efficiency, the device circumferential profile correction factor, and the device crystal detection efficiency correction factor based on the determined first mapping relationship, second mapping relationship, third mapping relationship, fourth mapping relationship, fifth mapping relationship, and sixth mapping relationship. For example, the device geometry correction factor may be determined based on the first geometry correction factor and the first mapping relationship. As another example, the device crystal interference correction factor may be determined based on the first crystal interference correction factor and the second mapping relationship.

In some embodiments, the target normalization correction factor of the imaging device may be expressed as a value or parameter, and the processing device 120 may determine a product of all correction factors of the target normalization correction factor of the imaging device as the target normalization correction factor of the imaging device. For example, the target normalization correction factor of the imaging device may include the device geometry correction factor, the device crystal interference correction factor, and the device axial profile correction factor, then the target normalization correction factor of the imaging device may be expressed as a product of the device geometry correction factor, the device crystal interference correction factor, and the device axial profile correction factor.

In some embodiments, the processing device 120 may perform the normalization correction on the target coincidence event data according to the correction factors of the imaging device, and perform image reconstruction based on normalized corrected target coincidence event data to generate the target image.

In some embodiments of the present disclosure, the mapping relationship between the normalization correction factor of the background coincidence event data and the normalization correction factor of the phantom coincidence event data is obtained based on the background coincidence event data and the phantom coincidence event data, and the target normalization correction factor of the imaging device is obtained based on the background coincident data and the mapping relationship without the need for CT scan data, which simplifies the process of normalization correction of the imaging device, and also reduces radiation damage to patients and operators, making the process be simple and easy to implement, and providing good versatility. At the same time, by dividing the target normalization correction factor into a plurality of items for calculating separately, the consideration of various factors is more comprehensive, and the obtained target normalization correction factor has good accuracy and high reliability.

FIG. 15 is a schematic diagram illustrating an exemplary process for image reconstruction according to some embodiments of the present disclosure.

As shown in FIG. 15, in some embodiments, a process 1500 may include one or more of the following operations. In some embodiments, the process 1500 may be performed by the processing device 120.

In 1510, background coincidence event data and target coincidence event data may be obtained, the background coincidence event data being related to a first plurality of background coincidence events, the target coincidence event data being related to a target object. In some embodiments, the operation 1510 may be performed by the first data obtaining module 210 or the third data obtaining module 310.

In some embodiments, the processing device 120 may obtain the background coincidence event data and the target coincidence event data of the target object through an imaging device using various manners. For more descriptions of how to obtain the background coincidence event data and the target coincidence event data of the target object, please refer to related descriptions of the operation 510, which will not be repeated here.

In 1520, an initial attenuation sonogram may be estimated. In some embodiments, the operation 1520 may be performed by the sinogram generation module 320.

In some embodiments, the processing device 120 may estimate the initial attenuation sinogram based on the background coincidence event data. For more descriptions of how to obtain the initial attenuation sinogram, please refer to related description of the operation 620, which will not be repeated here.

In 1530, an attenuation map may be reconstructed. In some embodiments, the operations 1530-1570 may be performed by the image reconstruction module 330.

In some embodiments, the processing device 120 may reconstruct the attenuation map based on the initial attenuation sinogram. For more descriptions of how to reconstruct the attenuation map, refer to related descriptions of the operation 630, which will not be repeated here.

In 1540, a scatter estimation image may be determined.

In some embodiments, the processing device 120 may determine the scatter estimation based on the attenuation map. In some embodiments, the processing device 120 may reconstruct an image based on the target coincidence event data and random estimation to obtain the initial image, wherein the random estimation may be obtained directly from delayed coincidence data, or obtained through noise reduction. The scatter estimation image may be obtained based on the initial image and the attenuation map using analytical algorithms or Monte Carlo simulations.

In some embodiments, operations 1550 and 1560 may be performed iteratively after the scatter estimation image is determined.

In 1550, the image may be updated.

In 1560, whether a first preset condition is met may be judged.

In 1570, the process may be terminated.

In some embodiments, the processing device 120 may perform scatter correction based on the scatter estimation image to obtain a corrected initial image. Specifically, the processing device 120 may perform the scatter correction on the target coincidence event data according to the scatter estimation image, and then correct an initial image (that is, reconstruct the initial image) according to scatter-corrected target coincidence event data to obtain the corrected initial image.

In some embodiments, the processing device 120 may iteratively update the corrected initial image based on the target coincidence event data and the initial attenuation sinogram to meet the first preset condition, and if the first preset condition is met, the operation 1570 may be performed to terminate the iteration, and designate an updated corrected initial image meeting the first preset condition as the target image. If the first preset condition is not met, the processing device 120 may return to the operation 1550 for a next iteration. In some embodiments, the processing device 120 may update the corrected initial image in various ways, for example, update the corrected initial image according to the formula (28).

In some embodiments, the first preset condition may include at least one of reaching a fixed count of iterations and a difference between images in two adjacent iterations being smaller than a preset threshold.

FIG. 16 is a schematic diagram illustrating an exemplary process for image reconstruction according to some embodiments of the present disclosure.

As shown in FIG. 16, in some embodiments, a process 1600 may include one or more of the following operations. In some embodiments, the process 1600 may be performed by the processing device 120.

In 1610, background coincidence event data and target coincidence event data may be obtained, the background coincidence event data being related to a first plurality of background coincidence events, the target coincidence event data being related to a target object.

In 1620, an initial attenuation sonogram may be estimated.

In 1630, the attenuation map may be reconstructed. In some embodiments, the operations 1630-1680 may be performed by the image reconstruction module 330.

In 1640, a scatter estimation image may be determined.

In some embodiments, the operations1610-1640 may be the same as or similar to the operations1 510-1540, and will not be repeated here.

In some embodiments, after determining the scatter estimation image, the processing device 120 may perform operations 1650 to 1670 iteratively.

In 1650, the image may be updated.

In 1660, the initial attenuation sonogram may be updated.

In 1670, whether a second preset condition is met may be judged.

In 1680, the process may be terminated.

In some embodiments, the processing device 120 may iteratively update the corrected initial image and the initial attenuation sinogram based on the target coincidence event data and the initial attenuation sinogram to meet the second preset condition. If the second preset condition is met, the processing device 120 may execute the operation 1680 to end the iteration, and designate an updated corrected initial image meeting the first preset condition as the target image. If the second preset condition is not met, the processing device 120 may return to the operation 1650 for a next iteration. For more descriptions of how to obtain the corrected initial image and how to update the the image, please refer to relevant descriptions in FIG. 15, which will not be repeated here.

In some embodiments, the second preset condition may include at least one of reaching a fixed count of iterations, a difference between images in two adjacent iterations being less than a preset threshold, a difference between two adjacent initial attenuation sinograms being less than a preset threshold, or the like.

In some embodiments, the processing device 120 may update the initial attenuation sinogram corresponding to the target coincidence event data in various ways, for example, update the initial attenuation sinogram through the formula (19) and formula (21).

FIG. 17 is a schematic diagram illustrating an exemplary process for image reconstruction according to some embodiments of the present disclosure.

As shown in FIG. 17, in some embodiments, a process 1700 may include one or more of the following operations. In some embodiments, the process 1700 may be performed by the processing device 120.

In 1710, background coincidence event data and target coincidence event data may be obtained, the background coincidence event data being related to a first plurality of background coincidence events, the target coincidence event data being related to a target object.

In 1720, an initial attenuation sonogram may be estimated.

In some embodiments, the operations 1710-1720 may be the same as or similar to the operations 1510-1520, and will not be repeated here.

In some embodiments, the processing device 120 may obtain a reconstructed initial image based on the initial attenuation sinogram and the target coincidence event data. Specifically, the processing device 120 may perform attenuation correction on the target coincidence event data according to the initial attenuation sinogram, reconstruct an initial image according to the attenuation-corrected target coincidence event data, and obtain the reconstructed initial image.

In some embodiments, the processing device 120 may iteratively update the reconstructed initial image, the initial attenuation sinogram, an attenuation map, and a scatter estimation image until a third preset condition is met, and designate an updated reconstructed initial image meeting the third preset condition as the target image.

In some embodiments, the third preset condition may include at least one of reaching a fixed count of iterations, a difference between images in two adjacent iterations less than a preset threshold, a difference between two adjacent initial attenuation sinograms being less than a preset threshold, and a difference between two adjacent iterations being smaller than a preset threshold, a difference between two attenuation maps being smaller than a preset threshold, and a difference between two adjacent scatter estimation images being smaller than a preset threshold.

In some embodiments, after determining the scatter estimation image, the processing device 120 may perform the operations 1730-1770 iteratively. In some embodiments, the operations 1730-1780 may be performed by the image reconstruction module 330.

In 1730, the image may be updated.

In some embodiments, the processing device 120 may obtain an updated image of a current iteration based on an updated image generated by a previous iteration, an attenuation sinogram generated by the previous iteration, and a scatter estimation image generated by the previous iteration, wherein an updated image generated by a first iteration is the reconstructed initial image. In some embodiments, the processing device 120 may obtain the updated image of the current iteration in various ways, for example, the processing device 120 may update the updated image generated in the previous iteration according to the formula (28), and obtain the updated image of the current iteration.

In 1740, the initial attenuation sonogram may be updated.

In some embodiments, the processing device 120 may determine the attenuation sinogram of the current iteration in various ways based on the updated image of the current iteration. For example, the processing device 120 may obtain the attenuation sinogram of the current iteration by updating the attenuation sinogram of the previous iteration using the formula (19) and formula (21).

In 1750, the attenuation map may be reconstructed.

In some embodiments, the processing device 120 may determine the attenuation map of the current iteration in various ways based on the attenuation sinogram of the current iteration, for example, the processing device 120 may determine the attenuation map of the current iteration according to the attenuation sinogram of the current iteration according to formula (23).

In 1760, the scatter estimation image may be updated.

In some embodiments, the processing device 120 may determine the scatter estimation image of the current iteration in various ways based on the attenuation map of the current iteration. For more descriptions of how to obtain the scatter estimation image based on the attenuation map, refer to related descriptions of the operation 630, which will be not repeated here.

In 1770, whether the third preset condition is met may be judged.

In 1780, the process may be terminated.

In some embodiments, at the end of each round of iteration, the processing device 120 may determine whether the third preset condition is met. If the third preset condition is met, the processing device 120 may execute the operation 1780 to terminate the iteration, and designate an updated corrected initial image meeting the first preset condition as the target image. If the third preset condition is not met, the processing device 120 may return to the operation 1730 for a next iteration.

It should be noted that the above descriptions about the processes 500, 600, 700, 900, 1000, 1500, 1600, and 1700 are only for illustration and description, and do not limit the scope of application of the present disclosure. For those skilled in the art, various modifications and changes may be made to the processes 500, 600, 700, 900, 1000, 1500, 1600, and 1700 under the guidance of the present disclosure. However, such modifications and changes are still within the scope of the present disclosure. For example, the order of the operations for determining the first normalization correction factor and the second normalization correction factor in the process 700 may be exchanged casually.

Possible beneficial effects of the embodiments of the present disclosure may include but are not limited to that: (1) by obtaining the initial attenuation sinogram and the target normalization correction factor through the background coincidence event data and performing the normalization correction, attenuation correction, scatter correction, and image update operations on PET data based on the target normalization correction factor and the initial attenuation sinogram, attenuation, scatter, and normalization of the PET data without using CT scan data may be achieved, image reconstruction may be achieved without relying on CT scan data, the scanning operation process is simplified, the scanning time is reduced, and the radiation damage of the entire PET system to patients and device operators is reduced; (2) the quality of the reconstructed image is greatly improved through a plurality of iterative updates of the image, so that the reconstructed image can well meet the diagnostic requirements and greatly improve the diagnostic quality; (3) the mapping relationship between the target normalization correction factors of the background coincidence event data and the phantom coincidence event data is obtained based on the background coincidence event data and the phantom coincidence event data, and the target normalization correction factor of the imaging device is obtained based on the background coincident data and the mapping relationship without using CT scan data, which simplifies the process of normalization correction of the imaging device, and also reduces radiation damage to patients and operators, is simple and easy to implement, and has good versatility; (4) by dividing the target normalization correction factor into a plurality of items for calculating separately, the consideration of various factors is more comprehensive, and the obtained target normalization correction factor has good accuracy and high reliability.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure and are within the spirit and scope of the exemplary embodiments of the present disclosure.

Moreover, certain terminology has been used to describe embodiments of the present disclosure. For example, the terms "one embodiment," "an embodiment," and "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures, or characteristics may be combined as suitable in one or more embodiments of the present disclosure.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, numbers describing the number of ingredients and attributes are used. It should be understood that such numbers used for the description of the embodiments use the modifier "about", "approximately", or "substantially" in some examples. Unless otherwise stated, "about", "approximately", or "substantially" indicates that the number is allowed to vary by ±20%. Correspondingly, in some embodiments, the numerical parameters used in the description and claims are approximate values, and the approximate values may be changed according to the required characteristics of individual embodiments. In some embodiments, the numerical parameters should consider the prescribed effective digits and adopt the method of general digit retention. Although the numerical ranges and parameters used to confirm the breadth of the range in some embodiments of the present disclosure are approximate values, in specific embodiments, settings of such numerical values are as accurate as possible within a feasible range.

For each patent, patent application, patent application publication, or other materials cited in the present disclosure, such as articles, books, specifications, publications, documents, or the like, the entire contents of which are hereby incorporated into the present disclosure as a reference. The application history documents that are inconsistent or conflict with the content of the present disclosure are excluded, and the documents that restrict the broadest scope of the claims of the present disclosure (currently or later attached to the present disclosure) are also excluded. It should be noted that if there is any inconsistency or conflict between the description, definition, and/or use of terms in the auxiliary materials of the present disclosure and the content of the present disclosure, the description, definition, and/or use of terms in the present disclosure is subject to the present disclosure.

Finally, it should be understood that the embodiments described in the present disclosure are only used to illustrate the principles of the embodiments of the present disclosure. Other variations may also fall within the scope of the present disclosure. Therefore, as an example and not a limitation, alternative configurations of the embodiments of the present disclosure may be regarded as consistent with the teaching of the present disclosure. Accordingly, the embodiments of the present disclosure are not limited to the embodiments introduced and described in the present disclosure explicitly.

## Claims

1. A method implemented on at least one machine each of which has at least one processor (120) and at least one storage device (130) for image reconstruction, comprising:
obtaining background coincidence event data and target coincidence event data, the background coincidence event data being related to a first plurality of background coincidence events, the target coincidence event data being related to a target object;
estimating an initial attenuation sinogram based on the background coincidence event data; and
generating a target image by performing image reconstruction based on the initial attenuation sinogram and the target coincidence event data.

2. The method of claim 1, wherein the obtaining background coincidence event data and target coincidence event data includes:
collecting the background coincidence event data before, after, or simultaneously with the target coincidence event data.

3. The method of claim 1 or claim 2, wherein the estimating an initial attenuation sinogram based on the background coincidence event data includes:
determining the initial attenuation sinogram using a maximum likelihood estimation algorithm based on the background coincidence event data.

4. The method of any one of claims 1-3, wherein the background coincidence event data includes data received by at least one combined response line, and each of the at least one combined response line is obtained by combining two or more original response lines.

5. The method of any one of claims 1-4, wherein the generating a target image by performing image reconstruction based on the initial attenuation sinogram and the target coincidence event data includes:
obtaining a corrected initial image by performing the image reconstruction based on the initial attenuation sinogram and the target coincidence event data, the corrected initial image being a scatter-corrected image; and
iteratively updating, based on the target coincidence event data and the initial attenuation sinogram, the corrected initial image until a first preset condition is met, and designating an updated corrected initial image meeting the first preset condition as the target image; or iteratively updating, based on the target coincidence event data and the initial attenuation sinogram, the corrected initial image and the initial attenuation sinogram until a second preset condition is met, and designating an updated corrected initial image meeting the second preset condition as the target image.

6. The method of claim 5, wherein the obtaining a corrected initial image by performing the image reconstruction based on the initial attenuation sinogram and the target coincidence event data includes:
reconstructing an attenuation map based on the initial attenuation sinogram;
determining a scatter estimation image based on the attenuation map and the target coincidence event data; and
obtaining the corrected initial image by performing the image reconstruction based on the target coincidence event data, the initial attenuation sinogram, and the scatter estimation image.

7. The method of any one of claims 1-4, wherein the generating a target image by performing image reconstruction based on the initial attenuation sinogram and the target coincidence event data includes:
obtaining a reconstructed initial image based on the initial attenuation sinogram and the target coincidence event data; and
iteratively updating the reconstructed initial image, the initial attenuation sinogram, an attenuation map, and a scatter estimation image until a third preset condition is met, and designating an updated reconstructed initial image meeting the third preset condition as the target image.

8. The method of claim 7, wherein the iteratively updating the reconstructed initial image, the initial attenuation sinogram, an attenuation map, and a scatter estimation image includes:
obtaining an updated image of a current iteration based on an updated image generated by a previous iteration, an attenuation sinogram generated by the previous iteration, and a scatter estimation image generated by the previous iteration, wherein an updated image generated by a first iteration is the reconstructed initial image;
determining an attenuation sinogram of the current iteration based on the updated image of the current iteration;
determining an attenuation map of the current iteration based on the attenuation sinogram of the current iteration; and
determining a scatter estimation image of the current iteration based on the attenuation map of the current iteration.

9. The method of any one of claims 1-8, wherein
the target coincidence event data is processed by normalization correction; or
the background coincidence event data is processed by normalization correction.

10. The method of any one of claims 1-9, wherein the generating a target image by performing image reconstruction based on the initial attenuation sinogram and the target coincidence event data comprises:
obtaining a target normalization correction factor;
correcting the target coincidence event data based on the target normalization correction factor; and
generating the target image by performing image reconstruction based on the initial attenuation sinogram and the corrected target coincidence event data.

11. The method of any one of claims 1-10, wherein the target image is an attenuation-corrected image or a scatter-corrected image.

12. The method of claim 10 or claim 11, wherein the target normalization correction factor is determined by:
obtaining first reference background coincidence event data related to a second plurality of background coincidence events, wherein the first and second plurality of background coincidence events are generated by a spontaneous background radiation of a crystal in the imaging device and collected in the same collection or different collections;
determining a reference normalization correction factor corresponding to the second plurality of background coincidence events based on the first reference background coincidence event data; and
determining the target normalization correction factor based on the reference normalization correction factor and a mapping relationship between the target normalization correction factor and the reference normalization correction factor

13. The method of claim 2, wherein the obtaining background coincidence event data and target coincidence event data includes:
obtaining the background coincidence event data by identifying, from single event data of a plurality of single events generated during imaging the target object, the background coincidence event data using a first rule; and
obtaining the target coincidence event data by identifying, from the single event data, the target coincidence event data using a second rule.

14. The method of claim 13, wherein
the plurality of single events include a first single event, a second single event, a third single event, and a fourth single event;
the first rule includes: in response to a determination that the second single event precedes the first single event in time, an energy of the first single event is in a first energy window, an energy of the second single event is in a second energy window, and a time difference between the first single event and the second single event is in a first time window, designating the first single event and the second single event as a background coincidence event; and
the second rule includes: in response to a determination that the fourth single event precedes the third single event in time, an energy of the third single event and an energy of the fourth single event are both in a third energy window, and a time difference between the third single event and the fourth single event is in a second time window, designating the third single event and the fourth single event as a target coincidence event.

15. The method of claim 12, the mapping relationship is determined by:
obtaining second reference background coincidence event data and phantom coincidence event data, the second reference background coincidence event data being related to a second plurality of background coincidence events, the phantom coincidence event data being related to a plurality of phantom coincidence events;
determining at least one first normalization correction factor corresponding to the second plurality of background coincidence events based on the second reference background coincidence event data;
determining at least one second normalization correction factor corresponding to the plurality of phantom coincidence events based on the phantom coincidence event data; and
determining the mapping relationship based on the at least one first normalization correction factor and the at least one second normalization correction factor.
